# EUROPEAN PATENT APPLICATION

(11) **EP 4 804 097 A1**
(43) Date of publication of application: **09.09.2026**
(21) Application number: 24884648.7
(22) Date of filing: 28.10.2024
(51) Int. Cl.: G06Q 20/06

(54) **DIGITAL CURRENCY PAYMENT METHOD, CHIP, APPARATUS AND SYSTEM**

(30) Priority: 01.11.2023 CN 202311444030
(71) Applicant: Digital Currency Institute, The People's Bank of China, Beijing 100071 (CN)
(72) Inventor: MU, Changchun, Beijing 100071 (CN); DI, Gang, Beijing 100071 (CN); LIANG, Wei, Beijing 100071 (CN); BIAN, Yongchao, Beijing 100071 (CN); PENG, Chenyi, Beijing 100071 (CN)
(74) Representative: Piticco, Lorena
(86) International application number: PCT/CN2024/127678
(87) International publication number: WO 2025/092645

(57) **Abstract**

The present application discloses a digital currency payment method, a chip, an apparatus and a system. The method is applied to a chip, where the chip comprises a security element, a first communication component and a second communication component, the security element is used for opening a digital currency hardware wallet, a communication protocol used by the first communication component includes a near field communication protocol and/or a range controlled communication protocol, and a communication protocol used by the second communication component includes a Bluetooth communication protocol. The method comprises: using a second communication component to receive hardware wallet opening data sent by a digital currency client, and opening a digital currency hardware wallet in a security element; and using a first communication component to receive a payment request, and performing a digital currency transaction. The present app lication solves the problem of application limitation in near field communication payment, and effectively expands application scenarios of near field communication payment.

## Description

The present application claims the priority to the Chinese Patent Application No. 202311444030.7, titled "DIGITAL CURRENCY PAYMENT METHOD, CHIP, APPARATUS AND SYSTEM", filed on November 1, 2023 with the China National Intellectual Property Administration, which is incorporated herein by reference in its entirety.

### FIELD

The present disclosure relates to the technical field of digital currency, and in particular to a method, a chip, an apparatus and a system for digital currency payment.

### BACKGROUND

Presently, payments based on Near Field Communication (NFC), Range Controlled Communication (RCC) or other near field communication technologies mainly rely on NFC components inherent in mobile terminal devices such as smartphones and smartwatches. Thus, for mobile terminal devices without NFC components, such as Android phones without NFC function, payments based on NFC cannot be performed. Further, even for mobile terminal devices with NFC components, if the mobile terminal devices have limited protocol interfaces, such as iOS phones, it is required to perform special modifications on the NFC components in the mobile terminal devices for the new scenarios such as digital currency payments, to perform NFC digital currency transactions. Therefore, the conventional NFC payment methods have certain application limitations.

### SUMMARY

In view of this, a method, a chip, an apparatus and a system for digital currency payment are provided in the embodiments of the present disclosure, to address the application limitations in the conventional NFC payment methods and effectively expand NFC payment application scenarios.

To achieve the above objective, in a first aspect, a method for digital currency payment is provided according to an embodiment of the present disclosure. The method is implemented on a chip. The chip includes a secure element, a first communication component and a second communication component. The secure element opens a digital currency hardware wallet, a communication protocol adopted by the first communication component includes a near field communication protocol and/or a range controlled communication protocol, and a communication protocol adopted by the second communication component includes a Bluetooth communication protocol. The method includes: receiving, by the second communication component, hardware wallet opening data from a digital currency client, and opening a digital currency hardware wallet in the secure element; and receiving, by the first communication component, a payment request, and performing, by the digital currency hardware wallet, a digital currency transaction.

In an embodiment, the method further includes: receiving, by the second communication component, an authorization authentication request from the digital currency client, generating an authorization authentication random number in response to the authorization authentication request, and sending the authorization authentication random number to the digital currency client, to cause the digital currency client to generate authorization authentication data based on the authorization authentication random number; and performing verification, by the second communication component, on the authorization authentication data from the digital currency client, determining, in a case that the authorization authentication data passes the verification, that the digital currency client is an authorized digital currency client, and receiving the hardware wallet opening data from the digital currency client.

In an embodiment, the opening a digital currency hardware wallet in the secure element includes: decrypting, by the second communication component, the hardware wallet opening data, and transmitting the decrypted hardware wallet opening data to the secure element, where the hardware wallet opening data includes an opening execution instruction and personalized data; and parsing and executing, by the secure element, the opening execution instruction, and storing, by the secure element, the personalized data.

In an embodiment, the method further includes: sending link information of the second communication component to a first terminal device on which the digital currency client is arranged; and establishing a Bluetooth communication connection between the second communication component and the digital currency client, in response to a triggering operation for the link information.

In an embodiment, the receiving, by the first communication component, a payment request includes: intercepting external interaction information; and invoking, in a case that the intercepted external interaction information is a payment request, the first communication component to transmit the payment request to the secure element.

In an embodiment, the digital currency hardware wallet has a first mode or a second mode. In the first mode, a transaction is performed based on token information stored in the digital currency hardware wallet, and in the second mode, a transaction is performed based on a digital currency account associated with the digital currency hardware wallet. The receiving, by the first communication component, a payment request and performing, by the digital currency hardware wallet, a digital currency transaction includes: performing, in a case that the digital currency hardware wallet is in the first mode, the digital currency transaction based on the token information that indicates a digital currency amount stored in the digital currency hardware wallet; and sending, in a case that the digital currency hardware wallet is in the second mode, the payment request to a digital currency server through the digital currency client and a Bluetooth communication channel between the second communication component and the digital currency client, to cause the digital currency server to perform the digital currency transaction in response to the payment request based on the digital currency account associated with the digital currency hardware wallet.

In an embodiment, the method further includes: binding, in a case that the digital currency hardware wallet being in the first mode is of a first hardware wallet type, the digital currency client to the digital currency hardware wallet in response to a binding trigger, to convert the digital currency hardware wallet to be of a second hardware wallet type, where for the first hardware wallet type, the digital currency hardware wallet is not bound to the digital currency client, and for the second hardware wallet type, the digital currency hardware wallet is bound to the digital currency client; and switching the digital currency hardware wallet of the second hardware wallet type between the first mode and the second mode in response to receiving a mode conversion switching.

In an embodiment, after receiving the payment request by the first communication component, the method further includes: in a case that the digital currency hardware wallet is in the first mode, determining whether a consecutive transaction number of the digital currency hardware wallet exceeds a preset number threshold; performing data synchronization with the digital currency server through the Bluetooth communication channel and the digital currency client, receiving and storing new token information from the digital currency server after data synchronization through the Bluetooth communication channel and the digital currency client, and cleaning up invalid data, in a case that the consecutive transaction number of the digital currency hardware wallet exceeds the preset number threshold; and performing the digital currency transaction based on the token information that indicates the digital currency amount stored in the digital currency hardware wallet, in a case that the consecutive transaction number of the digital currency hardware wallet does not exceed the preset number threshold.

In an embodiment, the performing the digital currency transaction based on the token information that indicates a digital currency amount stored in the digital currency hardware wallet includes: generating, by the secure element, a first temporary random number, and obtaining target token information matching the payment request from the digital currency hardware wallet; generating a token key based on the first temporary random number, a payer factor stored by the secure element, a payee factor and a second temporary random number generated by a payee end, where the payee factor and the second temporary random number are included in the payment request; encrypting the token key by using a payee public key included in the payment request, and encrypting the target token information by using the token key; generating first payment information including the encrypted token key and the encrypted target token information; and sending, by the first communication component, the first payment information to the payee end corresponding to the payment request, to perform the digital currency transaction based on the first payment information.

In an embodiment, before sending the first payment information to the payee end corresponding to the payment request, the method further includes: determining whether a payment amount indicated by the payment request exceeds a preset payment threshold; adding an encrypted payment password to the first payment information, and sending the first payment information added with the encrypted payment password to the payee end to perform the digital currency transaction based on the first payment information added with the encrypted payment password, in a case that the payment amount indicated by the payment request exceeds the preset payment threshold; and sending the first payment information to the payee end corresponding to the payment request, in a case that the payment amount indicated by the payment request does not exceed the preset payment threshold.

In a second aspect, a method for digital currency payment is provided according to an embodiment of the present disclosure. The method is implemented on a digital currency client. The digital currency client and a chip for digital currency payment that includes a secure element, a first communication component and a second communication component are installed in a first terminal device. A communication protocol adopted by the first communication component includes a near field communication protocol and/or a range controlled communication protocol, and a communication protocol adopted by the second communication component includes a Bluetooth communication protocol. The method includes: establishing a Bluetooth communication connection between the second communication component and the first terminal device; sending a registration request for a digital currency hardware wallet to a trusted service manager; receiving hardware wallet opening data from the trusted service manager; and sending the hardware wallet opening data to the secure element through the Bluetooth communication connection to open the digital currency hardware wallet in the secure element, where the digital currency hardware wallet in the chip for digital currency payment performs a digital currency transaction by using the first communication component.

In an embodiment, the method further includes: sending an authorization authentication request to the second communication component through the Bluetooth communication connection, and receiving an authorization authentication random number for the authorization authentication request; and generating authorization authentication data based on the authorization authentication random number, and sending the authorization authentication data to the second communication component through the Bluetooth communication connection, to cause the second communication component to perform verification on the authorization authentication data, where in a case that the authorization authentication data passes the verification, the secure element parses and executes an opening execution instruction included in the hardware wallet opening data and stores personalized data included in the hardware wallet opening data.

In an embodiment, the method further includes: receiving a payment request from the digital currency hardware wallet being in a second mode through the second communication component; and generating second payment information corresponding to the payment request, and sending the second payment information to a digital currency server, to cause the digital currency server to perform the digital currency transaction based on the second payment information.

In an embodiment, the method further includes: establishing an account association relationship with the digital currency hardware wallet; and sharing token information with the digital currency hardware wallet in the secure element based on the account association relationship, in a case that the digital currency hardware wallet is in a second mode.

In an embodiment, the establishing a Bluetooth communication connection between the second communication component and the first terminal device includes: determining, in response to a hardware wallet opening trigger, whether an operating system of the first terminal device is a target system, where a communication protocol interface of the target system corresponding to the first communication component is not open externally; and sending, in a case that the operating system of the first terminal device is the target system and no Bluetooth communication connection is established between the first terminal device and the second communication component, a prompt message indicating that no Bluetooth communication connection is established to prompt an operator to trigger link information of the second communication component to establish the Bluetooth communication connection between the first terminal device and the second communication component.

In an embodiment, the method further includes: receiving a prompt message indicating a network connecting operation from the chip for digital currency payment, to establish a communication connection between the digital currency client and the trusted service manager based on the prompt message; and performing data synchronization between the chip for digital currency payment and the trusted service manager through the communication connection, and sending, after the data synchronization, new token information sent by the trusted service manager to the chip for digital currency payment, to cause the chip for digital currency payment to update stored token information and clean up invalid data.

In an embodiment, the method further includes: generating, in response to a loss report operation for a digital currency hardware wallet from a second terminal device, a loss report request, and sending the loss report request to the trusted service manager, to cause the trusted service manager to perform loss report processing on the digital currency hardware wallet to prohibit payment of the digital currency hardware wallet, where a digital currency client on the second terminal device is logged in an account associated with the digital currency hardware wallet.

In a third aspect, a chip for digital currency payment is provided according to an embodiment of the present disclosure. The chip includes a secure element, a first communication component, and a second communication component. A communication protocol adopted by the first communication component includes a near field communication protocol and/or a range controlled communication protocol, and the first communication component is configured to receive a payment request. A communication protocol adopted by the second communication component includes a Bluetooth communication protocol, and the second communication component is configured to receive hardware wallet opening data from a digital currency client. The secure element is configured to open a digital currency hardware wallet based on the hardware wallet opening data and control the digital currency hardware wallet to perform a digital currency transaction by using the first communication component in response to the payment request.

In a fourth aspect, an apparatus for digital currency payment is provided according to an embodiment of the present disclosure. The apparatus for digital currency payment and a chip for digital currency payment that includes a secure element, a first communication component and a second communication component are installed in a first terminal device. A communication protocol adopted by the first communication component includes a near field communication protocol and/or a range controlled communication protocol, and a communication protocol adopted by the second communication component includes a Bluetooth communication protocol. A Bluetooth communication connection is established between the apparatus for digital currency payment and the second communication component through the first terminal device. The apparatus for digital currency payment includes a registration module and an account management module. The registration module is configured to send a registration request for a digital currency hardware wallet to a trusted service manager, and receive hardware wallet opening data from the trusted service manager. The account management module is configured to send the hardware wallet opening data to the secure element through the Bluetooth communication connection to open the digital currency hardware wallet in the secure element, where the digital currency hardware wallet in the chip for digital currency payment performs a digital currency transaction by using the first communication component.

In a fifth aspect, a system for digital currency payment is provided according to an embodiment of the present application. The system includes a payee end, the chip for digital currency payment according to the embodiments in the third aspect, and the apparatus for digital currency payment according to the embodiments in the fourth aspect. The chip for digital currency payment and the digital currency client are installed in the first terminal device. The digital currency hardware wallet in the chip for digital currency payment is opened based on the Bluetooth communication connection between the digital currency client and the second communication component included in the chip for digital currency payment. The payee end is configured to send a payment request to the chip for digital currency payment through the near field communication of the first communication component included in the chip for digital currency payment. The chip for digital currency payment is configured to perform the digital currency transaction based on the payment request.

In a sixth aspect, an electronic device is provided according to an embodiment of the present disclosure. The electronic device includes the chip for digital currency payment according to the embodiments in the third aspect, and the apparatus for digital currency payment according to the embodiments in the fourth aspect.

In a seventh aspect, a computer-readable medium is provided according to an embodiment of the present disclosure. The computer-readable medium stores a computer program. The computer program, when executed by a processor, causes the processor to perform the method according to the embodiments in the first aspect or the method according to the embodiments in the second aspect.

The embodiments of the present disclosure have the following advantages or beneficial effects. In the methods according to the embodiments of present disclosure, a Bluetooth communication connection is established between the second communication component that may adopt a Bluetooth communication protocol included in the chip for digital currency payment (hereinafter referred to as the chip) and the authorized digital currency client, so that the authorized digital currency client may open a digital currency hardware wallet in the secure element included in the chip. The chip may receive a payment request through the first communication component that may adopt a near field communication protocol and/or a range controlled communication protocol and performs a digital currency transaction. That is, a NFC digital currency transaction is performed through the first communication component of the chip. As the chip includes the first communication component adopting the near field communication protocol and/or the range controlled communication protocol, the chip, when being implemented on a mobile terminal, may address the issue of NFC payment for mobile terminals without the NFC function or mobile terminals of which NFC interface is not open externally. Therefore, with the solutions according to the embodiments of the present disclosure, the issue of application limitations in NFC payment is solved, and thereby effectively expanding the application scenarios of NFC payment.

Further effects of the above unconventional solutions are described below in conjunction with specific embodiments.

### BRIEF DESCRIPTION OF THE DRAWINGS

In order to more clearly describe technical solutions in the conventional technology and in the embodiments of the present disclosure, drawings to be used in the description of the conventional technology and the embodiments of the present disclosure are briefly introduced hereinafter. It is apparent that the drawings described below illustrates merely some embodiments of the present disclosure, and those skilled in the art may obtain other drawings based on the provided drawings without any creative effort. All the obtained drawings fall within the protection scope of the present disclosure.
FIG. 1 is a flowchart of a method for digital currency payment according to an embodiment of the present disclosure;
FIG. 2 is a flowchart of a method for digital currency payment according to another embodiment of the present disclosure;
FIG. 3 is a schematic structural diagram of a chip for digital currency payment according to an embodiment of the present disclosure;
FIG. 4 is a flowchart of a method for digital currency payment implemented on a digital currency client according to an embodiment of the present disclosure;
FIG. 5 is a schematic structural diagram of an apparatus for digital currency payment according to an embodiment of the present disclosure;
FIG. 6 is a schematic structural diagram of a system for digital currency payment according to an embodiment of the present disclosure;
FIG. 7 is a flowchart of a process of registering and opening a digital currency hardware wallet in a method for digital currency payment in a near field communication scenario according to an embodiment of the present disclosure;
FIG. 8A is a flowchart of a part of a single-offline payment process in a method for digital currency payment in a near field communication scenario according to an embodiment of the present disclosure;
FIG. 8B is a flowchart of a part of a single-offline payment process in a method for digital currency payment in a near field communication scenario according to another embodiment of the present disclosure;
FIG. 8C is a flowchart of a part of a single-offline payment process in a method for digital currency payment in a near field communication scenario according to another embodiment of the present disclosure;
FIG. 9 is a flowchart of a dual-offline payment process in a method for digital currency payment in a near field communication scenario according to an embodiment of the present disclosure;
FIG. 10 is a flowchart of a method for digital currency payment in a near field communication scenario according to another embodiment of the present disclosure;
FIG. 11 is a schematic diagram of an exemplary system structure to which a method for digital currency payment or a chip for digital currency payment is applied according to an embodiment of the present disclosure; and
FIG. 12 is a schematic structural diagram of a computer system for implementing a first terminal device or a digital currency server according to an embodiment of the present disclosure.

### DETAILED DESCRIPTION

Exemplary embodiments of the present disclosure are described below in conjunction with the accompanying drawings. In the following description, various details of the embodiments of the present disclosure are described for understanding. These details are merely exemplary. Therefore, those skilled in the art should understand that various changes and modifications may be be made to the embodiments described herein without departing from the scope and spirit of the present disclosure. Similarly, for clarity and conciseness, descriptions of well-known functions and structures are omitted from the following descriptions.

In the near field communication transaction scenarios involved in the conventional digital currency applications, transactions are typically performed by utilizing near field communication functions, such as a Near Field Communication (NFC) function and a Range Controlled Communication (RCC) function, of mobile terminal devices. However, for mobile terminal devices without the functions, such as Android phones without NFC function, and even for mobile terminal devices that have the functions but do not open near field communication interface, such as iOS phones, NFC-based digital currency payments cannot be performed, resulting in limitations in performing digital currency payments in near field communication scenarios.

To address the limitations in performing digital currency payments in near field communication scenarios, a method, a chip, an apparatus and a system for digital currency payment are provided according to the embodiments of the present disclosure.

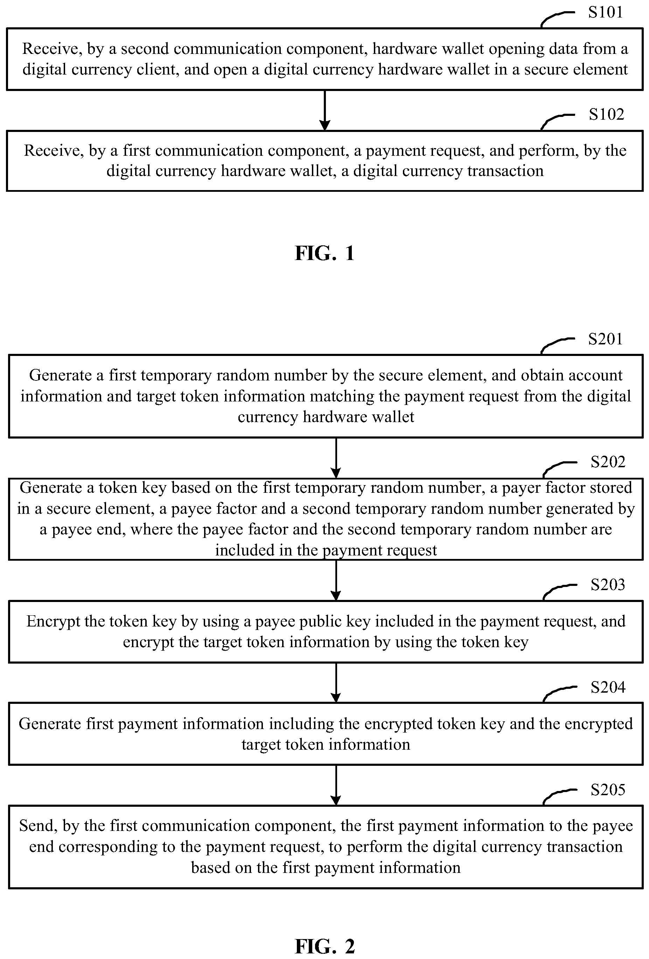

FIG. 1 is a flowchart of a method for digital currency payment according to an embodiment of the present disclosure. The method for digital currency payment is implemented on a chip, and the chip includes a secure element, a first communication component and a second communication component. The secure element is configured to open a digital currency hardware wallet. A communication protocol adopted by the first communication component includes a near field communication protocol and/or a range controlled communication protocol. A communication protocol adopted by the second communication component includes a Bluetooth communication protocol As shown in FIG. 1, the method for digital currency payment includes the following steps S101 and S102.

In step S101, the second communication component receives hardware wallet opening data from a digital currency client, and a digital currency hardware wallet is opened in the secure element.

In step S102, the first communication component receives a payment request, and the digital currency hardware wallet performs a digital currency transaction.

In the embodiments of the present disclosure, the secure element has a high security level, high confidentiality, and a storage function. The secure element may be used to store digital currency hardware wallets, account information, transaction records of the digital currency hardware wallets, and the like.

In an embodiment of the present disclosure, the first communication component included in the chip for implementing the method for digital currency payment according to the embodiments of the present disclosure may be a component for performing the NFC function or a component for performing the RCC function, such as a component for performing near field communication by using a 2.45GHz frequency band combined with low-frequency magnetism.

In an embodiment of the present disclosure, the second communication component included in the chip may be a physical module, a component, a chip, or the like which supports the Bluetooth communication protocol in the conventional technology.

In an embodiment of the present disclosure, the secure element has high security, and personalized data, token information, and the like that are related to the digital currency hardware wallet and stored in the secure element are not allowed to be read by external devices. The secure element generally interacts with authorized digital currency clients or digital currency clients associated with accounts through a Bluetooth communication connection of the second communication component. The function of the secure element may be implemented based on an embedded programmable logic controller. Internal information of the embedded programmable logic controller is not allowed to be read by external devices. The key generation process after key negotiation with a peer device based on a private key, and operation processes of communication data, such as encryption, decryption, data signature, and signature verification, involved in a digital currency payment, are all completed in the programmable logic controller, thereby ensuring the security of key information.

In general, the chip including the secure element, the first communication component and the second communication component may be a part of a Subscriber Identity Module (SIM) card. The chip is arranged in a mobile terminal, then the mobile terminal, as a carrier of the chip, performs digital currency payment by using the chip which includes the secure element, the first communication module that may adopt a near field communication protocol and/or a range controlled communication protocol, and the second communication module that may adopt a Bluetooth communication protocol It should be noted that, regardless of whether the mobile terminal operates in a powered-on state, a powered-off state, a shutdown state, a network-connected state, a network-disconnected state or a faulty state, the chip in the SIM card of the mobile terminal that includes the secure element, the first communication module and the second communication module can function normally, to complete digital currency payment steps in the method for digital currency payment according to the embodiments of the present disclosure.

In addition, the chip, that includes the secure element, the first communication module adopting a near field communication protocol and/or a range controlled communication protocol and the second communication module and performs the method for digital currency payment according to the embodiments of the present disclosure, may be independently packaged in a housing to be used as an independent mobile payment card.

In the technical solutions according to the embodiment shown in FIG. 1, a Bluetooth communication connection is established between the second communication component that may adopt a Bluetooth communication protocol included in the chip for digital currency payment (hereinafter referred to as the chip) and the authorized digital currency client, so that the authorized digital currency client may open a digital currency hardware wallet in the secure element included in the chip. The chip may receive a payment request through the first communication component that may adopt a near field communication protocol and/or a range controlled communication protocol and performs a digital currency transaction. That is, a NFC digital currency transaction is performed through the first communication component of the chip. As the chip includes the first communication component adopting the near field communication protocol and/or the range controlled communication protocol, the chip, when being implemented on a mobile terminal, may address the issue of NFC payment for mobile terminals without the NFC function or mobile terminals of which NFC interface is not open externally. Therefore, with the solutions according to the embodiments of the present disclosure, the issue of application limitations in NFC payment is solved, and thereby effectively expanding the application scenarios of NFC payment.

In an embodiment of the present disclosure, the method for digital currency payment further includes: receiving, by the second communication component, an authorization authentication request from the digital currency client, generating an authorization authentication random number in response to the authorization authentication request, and sending the authorization authentication random number to the digital currency client, to cause the digital currency client to generate authorization authentication data based on the authorization authentication random number; and performing verification, by the second communication component, on the authorization authentication data from the digital currency client, determining, in a case that the authorization authentication data passes the verification, that the digital currency client is an authorized digital currency client, and receiving the hardware wallet opening data from the digital currency client.

That is, before the step S101 is performed, it is required to verify the digital currency client, to ensure that the digital currency client has the authority to send the hardware wallet opening data or open the digital currency hardware wallet in the secure element. That is, it is verified that the digital currency client is authorized by a trusted service manager (TSM), to standardize the management of opening digital currency hardware wallets in the chip and the management of the digital currency client, thereby ensuring the security and reliability of the opened digital currency hardware wallets.

In an embodiment of the present disclosure, in the process of the digital currency client generating the authorization authentication data based on the authorization authentication random number, an algorithm agreed between the authorized digital currency client and the chip in advance or an algorithm configured by the trusted service manager for the authorized digital currency client may be used, and the authorization authentication data is calculated by using the algorithm based on the authorization authentication random number. In addition, the security element in the chip may be configured with the algorithm, and the chip may calculate the authorization authentication data by using the algorithm based on the authorization authentication random number. In a case that the authorization authentication data calculated by the chip is consistent with the authorization authentication data calculated by the digital currency client, the digital currency client is determined as an authorized digital currency client. Thus, the reliability of the digital currency client with which the chip interacts is ensured through the verification process, thereby ensuring the security, reliability and legality of the opened digital currency hardware wallet.

In an embodiment of the present disclosure, the digital currency hardware wallet may be opened in the secure element by: decrypting, by the second communication component, the hardware wallet opening data, and transmitting the decrypted hardware wallet opening data to the secure element, where the hardware wallet opening data includes an opening execution instruction and personalized data; and parsing and executing, by the secure element, the opening execution instruction, and storing, by the secure element, the personalized data. That is, the opening execution instruction and the personalized data may be transmitted to the secure element through a Bluetooth communication channel established between the second communication component that may adopt the Bluetooth communication protocol and the authorized digital currency client, for opening the digital currency hardware wallet in the secure element. The personalized data includes, but is not limited to, any one or a combination of account information, token information, associated accounts, user information and the like of the digital currency hardware wallet. The second communication component decrypts the hardware wallet opening data, thereby ensuring the security of the transmitted hardware wallet opening data while enabling the second communication component to offload a non-payment function of the secure element.

In an embodiment of the present disclosure, the method for digital currency payment further includes: establishing a Bluetooth communication connection between the second communication component and the digital currency client. Specifically, the Bluetooth communication connection is established by: sending link information of the second communication component to a first terminal device on which the digital currency client is arranged; and establishing, in response to a triggering operation for the link information, the Bluetooth communication connection between the second communication component and the authorized digital currency client. The link information of the second communication component may be a combination of a device name and an ID of the second communication component. The link information is provided for facilitating related operations.

In an embodiment of the present disclosure, the process of opening the digital currency hardware wallet in the secure element through the Bluetooth communication connection between the second communication component and the authorized digital currency client includes: in a case that the chip and the digital currency client (where the digital currency client is usually a client authorized by the trusted service manager) are installed in a same first terminal device, establishing the Bluetooth communication channel between the digital currency client and the chip based on the Bluetooth function of the first terminal device and operations performed by the user on the first terminal device or the digital currency client; and applying for and registering the digital currency hardware wallet for the chip (that is, opening the digital currency hardware wallet in the secure element) by the trusted service manager, that is authorized by a central bank, triggered by operations of the user on the digital currency client. In an embodiment of the present disclosure, the process of applying for and registering the digital currency hardware wallet may include: sending, by the authorized digital currency client, a registration request to the trusted service manager, establishing, by the trusted service manager, an association relationship (such as a binding relationship or a management relationship) between the digital currency client and the chip, and transmitting personalized data related to opening the digital currency hardware wallet, such as account information of the digital currency hardware wallet, to the secure element through the digital currency client, to open the digital currency hardware wallet in the secure element. In the embodiments of the present disclosure, the trusted service manager authorized by the central bank generally refers to a platform or a server authorized by the central bank to manage digital currency accounts for a secondary banking institution.

In addition, in an embodiment of the present disclosure, the payment request is received by the first communication component by: intercepting external interaction information; and invoking, in a case that the intercepted external interaction information is a payment request, the first communication component to transmit the payment request to the secure element. In the present disclosure, the first communication component is controlled to only perform digital currency payment communication without any other communication, avoiding obtaining information of the digital currency hardware wallet, such as account information, in the chip through the first communication component. Thus, in performing digital currency payment based on the chip, the security of personal information can be ensured, and the legality and security of the digital currency transactions can be effectively protected.

In an embodiment of the present disclosure, to achieve good user experience for the digital currency hardware wallet opened in the secure element of the chip, the digital currency hardware wallet opened in the secure element has a first mode and a second mode. In the first mode, a transaction is performed based on token information stored in the digital currency hardware wallet; and in the second mode, a transaction is performed based on a digital currency account associated with the digital currency hardware wallet. Accordingly, the process of receiving the payment request by the first communication component and performing the digital currency transaction may include: performing, in a case that the digital currency hardware wallet is in the first mode, the digital currency transaction based on the token information that indicates a digital currency amount stored in the digital currency hardware wallet; and sending, in a case that the digital currency hardware wallet is in the second mode, the payment request to a digital currency server through the digital currency client and a Bluetooth communication channel between the second communication component and the digital currency client, to cause the digital currency server to perform the digital currency transaction in response to the payment request based on the digital currency account associated with the digital currency hardware wallet. In the present disclosure, the first mode and the second mode are configured for the digital currency hardware wallet, facilitating the user flexibly selecting a usage mode of the digital currency hardware wallet, meeting requirements of different users for digital currency hardware wallets, thereby improving the practicality of digital currency hardware wallets.

In addition, in the second mode, the digital currency hardware wallet may share the token information stored in the digital currency client with the digital currency client based on the associated account. Thus, the digital currency hardware wallet may share a balance in a main wallet (for example, a digital currency wallet of the digital currency client) to which the digital currency hardware wallet belongs, and it is unnecessary to recharge the digital currency hardware wallet, thereby achieving convenient and user-friendly payment experience.

In an embodiment of the present disclosure, two types of digital currency hardware wallet may be configured for the digital currency hardware wallet in the first mode: a first hardware wallet type and a second hardware wallet type. For the first hardware wallet type, the digital currency hardware wallet is not bound to the digital currency client; and for the second hardware wallet type, the digital currency hardware wallet is bound to the digital currency client. In the present disclosure, for a digital currency hardware wallet of the first hardware wallet type, the digital currency payment is performed only using the digital currency hardware wallet in the first mode, and the digital currency hardware wallet cannot be switched to the second mode. Only for a digital currency hardware wallet of the second hardware wallet type, the digital currency hardware wallet can be switch between the first mode and the second mode. In an embodiment of the present disclosure, the method for digital currency payment further includes: binding, in a case that the digital currency hardware wallet being in the first mode is of the first hardware wallet type, the digital currency client to the digital currency hardware wallet in response to a binding trigger, to convert the digital currency hardware wallet to be of the second hardware wallet type; and switching the digital currency hardware wallet of the second hardware wallet type between the first mode and the second mode in response to receiving a mode conversion switching.

In the present disclosure, with the above process, the digital currency hardware wallet of the first hardware wallet type (that is, a quasi account-based hardware wallet) may be bound to the digital currency client. Thus, the digital currency hardware wallet can be used in the second mode, facilitating the user flexibly selecting a mode or a hardware wallet type of the digital currency hardware wallet according to requirements, thereby improving the user experience.

In an embodiment of the present disclosure, after receiving the payment request by the first communication component, the method further includes: in a case that the digital currency hardware wallet is in the first mode, determining whether a consecutive transaction number of the digital currency hardware wallet exceeds a preset number threshold; performing data synchronization with the digital currency server through the Bluetooth communication channel and the digital currency client, receiving and storing new token information from the digital currency server after data synchronization through the Bluetooth communication channel and the digital currency client, and cleaning up invalid data, in a case that the consecutive transaction number of the digital currency hardware wallet exceeds the preset number threshold; and performing the digital currency transaction based on the token information that indicates the digital currency amount stored in the digital currency hardware wallet, in a case that the consecutive transaction number of the digital currency hardware wallet does not exceed the preset number threshold.

In an embodiment of the present disclosure, the number threshold may be set according to actual requirements.

In an embodiment of the present disclosure, the new token information may be token information indicating one or more large amounts (such as 5 yuan, 10 yuan, and 20 yuan) for replacing the original token information indicating small amounts (such as 5 cents and 1 yuan) in the digital currency hardware wallet (that is, the original small-denomination tokens in the digital currency hardware wallet are combined to a large-denomination token). Alternatively, the new token information may be new token information added to the digital currency hardware wallet (that is, the amount of digital currency stored in the digital currency hardware wallet is increased).

In an embodiment of the present disclosure, the token information in the digital currency hardware wallet in the first mode is generally obtained by: operating the authorized digital currency client installed in the first terminal device by the user to transmit the token information to the secure element in the chip through the authorized digital currency client, and storing the token information in the secure element. Thus, the token information in the digital currency hardware wallet is obtained. In an embodiment of the present disclosure, the token information transmitted by the authorized digital currency client may be a part of token information stored by the authorized digital currency client, or token information applied from the digital currency server and transferred from another digital currency account.

In an embodiment of the present disclosure, the token information is an important part of the digital currency information authenticated by an authoritative national department. The token information includes account information, amount information, and the like. In an authentication process of payment based on the token information, high confidentiality, timeliness, uniqueness and non-repudiation can be achieved, effectively ensuring the authenticity and legality of the user performing digital currency payment in a transaction, thereby preventing the token payment from being used for an illegal activity.

In the present disclosure, the consecutive transaction number of the digital currency hardware wallet is limited. In this way, frequent transactions due to lost of digital currency hardware wallets can be avoided, further ensuring the security of digital currency hardware wallets. Further, in a case that a consecutive transaction number of a digital currency hardware wallet exceeds a preset number threshold, the token information of the digital currency hardware wallet is updated by the digital currency server, and invalid data in the digital currency hardware wallet is cleaned up, to avoid affecting the efficiency of digital currency payments due to invalid data occupying space of the chip.

In an embodiment of the present disclosure, as shown in FIG. 2, for the digital currency hardware wallet in the first mode, the process of performing the digital currency transaction based on the token information that indicates the digital currency amount stored in the digital currency hardware wallet may include the following steps S201 to S205.

In step S201, a first temporary random number is generated by the secure element, and target token information matching the payment request are obtained from the digital currency hardware wallet.

In step S202, a token key is generated based on the first temporary random number, a payer factor stored in the secure element, a payee factor, and a second temporary random number generated by the payee end, where the payee factor and the second temporary random number are included in the payment request.

In step S203, the token key is encrypted using a payee public key included in the payment request, and the target token information is encrypted using the token key.

In step S204, first payment information including the encrypted token key and the encrypted target token information is generated.

In step S205, the first payment information is sent by the first communication component to the payee end corresponding to the payment request, and the digital currency transaction is performed based on the first payment information.

In an embodiment of the present disclosure, the first temporary random number may be generated by the secure element in a preconfigured manner for generating a first temporary random number, and the first temporary random number is random. In the present disclosure, the first temporary random number is used in encrypted information, so that even if the encrypted information is illegally stolen, the difficulty and complexity of decrypting the encrypted information to obtain effective information are increased due to the first temporary random number, thereby improving the reliability and security of the method for digital currency payment according to the embodiments of the present disclosure.

In an embodiment of the present disclosure, the payer factor stored in the secure element is automatically allocated by a payer hardware device to the digital currency hardware wallet for each transaction. The payee factor included in the payment request is automatically allocated by a payee hardware device to the payee end for each transaction.

In the present disclosure, for the process of generating a token key, a token key is generated for the digital currency hardware wallet in the first mode in each digital currency transaction. That is, the token key is generated for each transaction based on the digital currency hardware wallet in the first mode, and then the target token information is encrypted using the token key, thereby ensuring the security of the target token information.

In the present disclosure, the token key is encrypted using the payee public key, to ensure the transmission security of the token key. Then, the payee end may decrypt the encrypted token key by using a payee private key to obtain the token key, and decrypts the encrypted target token information by using the token key to obtain the target token information. Thus, the digital currency transaction between the digital currency hardware wallet in the first mode and the payee end is performed, effectively improving the security and reliability of the digital currency transaction.

In an embodiment of the present disclosure, the digital currency hardware wallet in the first mode may be of the first hardware wallet type or the second hardware wallet type. The digital currency hardware wallet in the first mode and of the hardware wallet second type (the digital currency hardware wallet of the second hardware wallet type is bound to the digital currency client) may interact with the payee end based on the technical solution shown in FIG. 2 to perform a digital currency transaction.

In addition, for the technical solution shown in FIG. 2, the payee end may operate in an offline state (that is, the communication between the payee end and the digital currency server is in an interrupted state). That is, digital currency transactions may be performed in a dual offline state (the communication between the chip and the digital currency client is interrupted and the payee end operates in an offline state) according to the technical solution, thereby ensuring that the digital currency transaction in the dual-offline state can be normally performed with high security and reliability.

It should be noted that in a case that the digital currency hardware wallet is in the second mode or the digital currency hardware wallet is in the first mode and of the first hardware wallet type (the digital currency hardware wallet of the first type is not bound to the digital currency client), information involved in a transaction based on the digital currency hardware wallet, such as token information and account information of the transaction, is generally encrypted using preset keys (that is, a private key and a public key that are agreed upon between the digital currency hardware wallet and the digital currency server, and between the payee end and the digital currency server).

In an embodiment of the present disclosure, the legitimacy of a visitor (such as the digital currency client or the payee end) may be verified based on a digital certificate authentication technology using a domestic cryptographic algorithm, to prevent the preset keys from being illegally stolen or tampered with.

In an embodiment of the present disclosure, the digital currency transaction is performed based on the first payment information by: transmitting, by the payee end, the first payment information or information to be verified in the first payment information to the digital currency server, and verifying, by the digital currency server, the first payment information, and performing and recording the digital currency transaction based on the first payment information.

It should be noted that the information transmitted between the payee end and the digital currency server is encrypted, to ensure the security of the transmitted information.

It should be noted that the "first payment information" and the "second payment information" described below according to the embodiments of the present disclosure are intended to distinguish different payment information, rather than limiting the order, number or the like of payment information.

In an embodiment of the present disclosure, the target token information matching the payment information from the digital currency hardware wallet is obtained by: splitting and/or merging one or more pieces of token information stored in the digital currency hardware wallet to obtain the target token information matching the payment information. The splitting and/or merging one or more pieces of token information stored in the digital currency hardware wallet may include: merging multiple pieces of token information indicating small amounts to one piece of token information indicating a large denomination, or splitting one or more pieces of token information into multiple pieces of token information indicating small denominations. For example, five pieces of token information respectively indicating 2 yuan are merged to one piece of token information indicating 10 yuan. For example, one piece of token information indicating 10 yuan is split into two pieces of token information respectively indicating 2 yuan, one piece of token information indicating 5 yuan, and one piece of token information indicating 1 yuan. In an embodiment of the present disclosure, the strategy for splitting and merging the token information may be configured according to requirements.

In an embodiment of the present disclosure, before sending the first payment information to the payee end corresponding to the payment request, the method further includes: determining whether a payment amount indicated by the payment request exceeds a preset payment threshold; adding an encrypted payment password to the first payment information, and sending the first payment information added with the encrypted payment password to the payee end to perform the digital currency transaction based on the first payment information added with the encrypted payment password, in a case that the payment amount indicated by the payment request exceeds the preset payment threshold; and sending the first payment information to the payee end corresponding to the payment request, in a case that the payment amount indicated by the payment request does not exceed the preset payment threshold. In an embodiment of the present disclosure, the payment threshold may be set according to the requirements of the user, to avoid malicious transfers caused by loss of the digital currency hardware wallet, thereby further improving the security of the digital currency hardware wallet.

In an embodiment of the present disclosure, in a case that the receipt amount indicated by the receipt information exceeds the preset payment threshold, a password input interface is provided for a first mobile terminal device, so that the user may input a payment password on the password input interface. The password input interface may be provided for the first mobile terminal device by: establishing a connection between the second communication component of the chip and the first mobile terminal device, providing the password input interface for the first mobile terminal device through the second communication component, and providing the payment password for the secure element of the chip through the second communication component.

In an embodiment of the present disclosure, the offline transaction indicates that the communication between the digital currency client of the terminal device and the digital currency server is in an interrupted state during a transaction.

According to the above solution, it is required to input a payment password in a case that the payment information indicating the payment amount exceeds the preset payment threshold, thereby performing a large-amount payment with the digital currency hardware wallet while further improving the security and reliability of the payment.

In addition, with the chip, the token information and transaction records of the digital currency hardware wallet may be updated in a case that the digital currency client is connected to the network. The transaction records may generally include: a transmission wallet ID field, a transaction time ciphertext field, a transaction amount field, a payee information field, and the like, which may vary according to requirements. The token information and the transaction records of the digital currency hardware wallet may be updated by: merging or splitting token information, deleting transaction records, and the like, to manage the token information and the transaction records of the digital currency hardware wallet, avoiding the issue of insufficient storage space caused by excessive token information and transaction records stored in the secure element.

In an embodiment of the present disclosure, the method for digital currency payment further includes: storing a transaction record matching the receipt information and the target token information stored in the secure element. According to the present disclosure, the transaction record matching the receipt information and the target token information is stored, so that even offline transactions can be traced.

It should be noted that the trusted service manager involved in the embodiments of the present disclosure is generally a platform for managing digital currency accounts.

It should be noted that the relationship between the Bluetooth communication connection and the Bluetooth communication channel is explained as follows. The Bluetooth communication channel between the chip for digital currency payment and the digital currency client is established by the chip for digital currency payment and a Bluetooth component of the terminal device through the Bluetooth communication connection, to transmit data between the chip for digital currency payment and the digital currency client.

In an embodiment of the present disclosure, the digital currency server generally refers to a server or a platform that supports digital currency transactions.

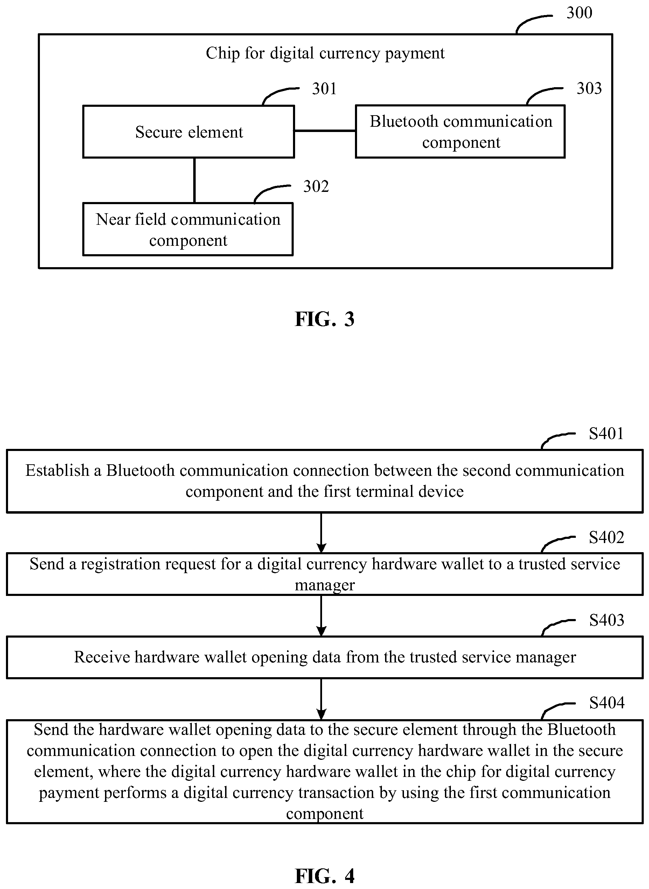

As shown in FIG. 3, a chip 300 for digital currency payment is provided according to an embodiment of the present disclosure. Specifically, the chip 300 for digital currency payment includes a secure element 301, a first communication component 302, and a second communication component 303.

A communication protocol adopted by the first communication component 302 includes a near field communication protocol and/or a range controlled communication protocol The first communication component 302 is configured to receive a payment request.

A communication protocol adopted by the second communication component 303 includes a Bluetooth communication protocol. The second communication component 303 is configured to receive hardware wallet opening data from a digital currency client.

The secure element 301 is configured to open a digital currency hardware wallet based on the hardware wallet opening data, and control the digital currency hardware wallet to perform a digital currency transaction by using the first communication component 302 in response to the payment request.

In an embodiment of the present disclosure, the second communication component 303 is further configured to: receive an authorization authentication request from the digital currency client, generate an authorization authentication random number in response to the authorization authentication request, and send the authorization authentication random number to the digital currency client, to cause the digital currency client to generate authorization authentication data based on the authorization authentication random number.

The second communication component 303 is further configured to performing verification on the authorization authentication data from the digital currency client, determine, in a case that the authorization authentication data passes the verification, that the digital currency client is an authorized digital currency client, and receive the hardware wallet opening data from the digital currency client.

In an embodiment of the present disclosure, the second communication component 303 is further configured to: decrypt the hardware wallet opening data, and transmit the decrypted hardware wallet opening data to the secure element 301. The hardware wallet opening data includes an opening execution instruction and personalized data.

The secure element 301 is further configured to parse and execute the open execution instruction and store personalized data.

In an embodiment of the present disclosure, the second communication component 303 is further configured to: send link information of the second communication component 303 to a first terminal device on which the digital currency client is arranged, and establish, in response to a triggering operation for the link information, a Bluetooth communication connection between the second communication component 303 and the digital currency client.

In an embodiment of the present disclosure, the chip 300 for digital currency payment further includes an interception module (not shown in FIG. 3).

The interception module (not shown in FIG. 3) is configured to: intercept external interaction information, and invoke, in a case that the intercepted external interaction information is a payment request, the first communication component 302 to transmit the payment request to the secure element 301.

In an embodiment of the present disclosure, the digital currency hardware wallet in the secure element 301 has a first mode and a second mode. In the first mode, a transaction is performed based on token information stored in the digital currency hardware wallet; and in the second mode, a transaction is performed based on a digital currency account associated with the digital currency hardware wallet.

The secure element 301 is further configured to perform, in a case that the digital currency hardware wallet is in the first mode, the digital currency transaction based on the token information that indicates a digital currency amount stored in the digital currency hardware wallet in the first mode.

The secure element 301 is further configured to send, in a case that the digital currency hardware wallet is in the second mode, the payment request to a digital currency server through the digital currency client and a Bluetooth communication channel between the second communication component 303 and the digital currency client, to cause the digital currency server to perform the digital currency transaction in response to the payment request and based on the digital currency account associated with the digital currency hardware wallet.

In an embodiment of the present disclosure, the secure element 301 is further configured to: bind, in a case that the digital currency hardware wallet being in the first mode is of a first hardware wallet type, the digital currency client to the digital currency hardware wallet in response to a binding trigger, to convert the digital currency hardware wallet to be of a second hardware wallet type, where for the first hardware wallet type, the digital currency hardware wallet is not bound to the digital currency client, and for the second hardware wallet type, the digital currency hardware wallet is bound to the digital currency client; and switch the digital currency hardware wallet of the second hardware wallet type between the first mode and the second mode in response to receiving a mode conversion switching.

In an embodiment of the present disclosure, the secure element 301 is further configured to, in a case that the digital currency hardware wallet is in the first mode, determine whether a consecutive transaction number of the digital currency hardware wallet exceeds a preset number threshold; perform data synchronization with the digital currency server through the Bluetooth communication connection and the digital currency client, receive and store new token information from the digital currency server after data synchronization through the Bluetooth communication connection and the digital currency client, and clean up invalid data, in a case that the consecutive transaction number of the digital currency hardware wallet exceeds the preset number threshold; and perform the digital currency transaction based on the token information that indicates the digital currency amount stored in the digital currency hardware wallet, in a case that the consecutive transaction number of the digital currency hardware wallet does not exceed the preset number threshold.

In an embodiment of the present disclosure, the secure element 301 is further configured to generate a first temporary random number, and obtain target token information matching the payment request from the digital currency hardware wallet; generate a token key based on the first temporary random number, a payer factor stored in the secure element, a payee factor, and a second temporary random number generated by a payee end, where the payee factor and the second temporary random number are included in the payment request; encrypt the token key by using a payee public key included in the payment request, and encrypt the target token information by using the token key; generate first payment information including the encrypted token key and the encrypted target token information; and send, by using the first communication component, the first payment information to the payee end corresponding to the payment request, to perform the digital currency transaction based on the first payment information.

In an embodiment of the present disclosure, the secure element 301 is further configured to: determine whether a payment amount indicated by the payment request exceeds a preset payment threshold; add an encrypted payment password to the first payment information, and send the first payment information added with the encrypted payment password to the payee end to perform the digital currency transaction based on the first payment information added with the encrypted payment password, in a case that the payment amount indicated by the payment request exceeds the preset payment threshold; and send the first payment information to the payee end corresponding to the payment request, in a case that the payment amount indicated by the payment request does not exceed the preset payment threshold.

A method for digital currency payment, implemented on a digital currency client, is further provided according to an embodiment of the present disclosure. The digital currency client and a chip for digital currency payment that includes a secure element, a first communication component and a second communication component are installed in a first terminal device. A communication protocol adopted by the first communication component includes a near field communication protocol and/or a range controlled communication protocol A communication protocol adopted by the second communication component includes a Bluetooth communication protocol. FIG. 4 shows a flowchart of a method for digital currency payment, implemented on a digital currency client, according to an embodiment of the present disclosure. Specifically, as shown in FIG. 4, the method for digital currency payment, implemented on the digital currency client, includes the following steps S401 to step S404.

In step S401, a Bluetooth communication connection between the second communication component and the first terminal device is established.

In step S402, a registration request for a digital currency hardware wallet is sent to a trusted service manager.

In step S403, hardware wallet opening data from the trusted service manager is received.

In step S404, the hardware wallet opening data is sent to the secure element through the Bluetooth communication connection to open the digital currency hardware wallet in the secure element. The digital currency hardware wallet in the chip for digital currency payment performs a digital currency transaction by using the first communication component.

In an embodiment of the present disclosure, the trusted service manager generally refers to a digital currency server authorized by the central bank for a secondary banking institution. It should be noted that the digital currency server involved in the embodiments of the present disclosure generally refers to the digital currency server authorized by the central bank for the secondary banking institution.

According to the method for digital currency payment, implemented on the digital currency client, in the present disclosure, a Bluetooth communication connection is established between the digital currency client and the chip for digital currency payment that are installed in the same first terminal device, and the digital currency hardware wallet is opened for the chip for digital currency payment through the Bluetooth communication connection, so that digital currency payment may be performed using the digital currency hardware wallet. Thus, both terminal devices without the NFC function and terminal devices with the NFC function which is not open externally can perform NFC payments, addressing the issue of application limitations in NFC payments, and thereby effectively expanding application scenarios of NFC payments.

In an embodiment of the present disclosure, the method for digital currency payment implemented on the digital currency client further includes: sending an authorization authentication request to the secure element through the Bluetooth communication connection, and receiving an authorization authentication random number corresponding to the authorization authentication request; and generating authorization authentication data based on the authorization authentication random number, and sending the authorization authentication data to the second communication component through the Bluetooth communication connection, to cause the second communication component to perform verification on the authorization authentication data. In a case that the authorization authentication data passes the verification, the secure element parses and executes an opening execution instruction included in the hardware wallet opening data and stores personalized data included in the hardware wallet opening data. In the present disclosure, the second communication component determines that the digital currency client is an authorized digital currency client through the above interaction process, to ensure the legality and security of the digital currency hardware wallet in the security element.

In an embodiment of the present disclosure, the method for digital currency payment implemented on the digital currency client further includes: receiving a payment request from the digital currency hardware wallet being in a second mode through the second communication component; and generating second payment information corresponding to the payment request, and sending the second payment information to the digital currency server, to cause the digital currency server to perform the digital currency transaction based on the second payment information. In this way, the digital currency hardware wallet in the second mode, as a payment account, performs payment through the digital currency server by using token information in an account associated with the digital currency hardware wallet.

In an embodiment of the present disclosure, the method for digital currency payment implemented on the digital currency client further includes: establishing an account association relationship with the digital currency hardware wallet; sharing token information with the digital currency hardware wallet in the secure element based on the account association relationship, in a case that the digital currency hardware wallet is in a second mode. That is, the digital currency hardware wallet, as a sub-wallet of the digital currency client, performs payment by using the token information in the digital currency client.

In an embodiment of the present disclosure, the digital currency client may further update the token information and clean transaction records in the digital currency hardware wallet, managing and maintaining the token information and the transaction records in the secure element by the digital currency client. In the present disclosure, while ensuring the accuracy of the token information and the transaction records in the digital currency hardware wallet in the secure element, the storage space of the secure element is optimized by updating the token information in the digital currency hardware wallet and the transaction records in the secure element to ensure that the secure element has sufficient storage space, thereby achieving sustainable use of the digital currency hardware wallet.

In an embodiment of the present disclosure, the method for digital currency payment implemented on the digital currency client further includes: receiving receipt information from the digital currency hardware wallet in the second mode connected to the second communication component through the Bluetooth communication connection; and generating second payment information corresponding to the receipt information, and sending the second payment information to the digital currency hardware wallet, to cause the digital currency hardware wallet to send the second payment information to the payee end to complete the receipt process. In the present disclosure, the digital currency hardware wallet performs the account function in the above transaction process. The digital currency hardware wallet directly interacts with the digital currency client in the transaction process, so that the digital currency client may perform payment using the first communication component of the chip for digital currency payment, thereby expanding the transaction scenarios of the digital currency client.

In an embodiment of the present disclosure, the Bluetooth communication connection between the second communication component through the first terminal device may be established by: determining, in response to a hardware wallet opening trigger, whether an operating system of the first terminal device is a target system, where a communication protocol interface of the target system corresponding to the first communication component is not open externally; and sending, in a case that the operating system of the first terminal device is the target system and no Bluetooth communication connection is established between the first terminal device and the second communication component, a prompt message indicating that no Bluetooth communication connection is established to prompt an operator to trigger link information of the second communication component to establish the Bluetooth communication connection between the first terminal device and the second communication component. In the present disclosure, it is determined whether the operating system of the first terminal device is the target system, then it may be accurately determined whether it is required to establish a Bluetooth communication connection between the first terminal device and the second communication component of the chip, even in a scenario such as various protocol interfaces of the first terminal device being not open externally.

In an embodiment of the present disclosure, the method for digital currency payment implemented on the digital currency client further includes: receiving a prompt message indicating a network connecting operation from the chip for digital currency payment, to establish a communication connection between the digital currency client and the trusted service manager based on the prompt message; and performing data synchronization between the chip for digital currency payment and the trusted service manager through the communication connection, and sending, after data synchronization, new token information sent by the trusted service manager to the chip for digital currency payment, to cause the chip for digital currency payment to update the stored token information and clean up invalid data. In the present disclosure, a connection between the digital currency hardware wallet and the digital currency server is established through the digital currency client, to manage the digital currency hardware wallet.

In an embodiment of the present disclosure, the method for digital currency payment implemented on the digital currency client further includes: in response to a loss report operation for a digital currency hardware wallet from a second terminal device, generating a loss report request by the digital currency client, and sending the loss report request to the digital currency server, to cause the digital currency server to perform loss report processing on the digital currency hardware wallet to prohibit payment of the digital currency hardware wallet, where a digital currency client on the second terminal device is logged in an account associated with the digital currency hardware wallet. In the present disclosure, if a mobile terminal on which a SIM card provided with a digital currency hardware wallet is arranged is lost, the user may log in to a digital currency client associated with the digital currency hardware wallet on another mobile terminal, to report the loss of the digital currency hardware wallet to prevent fund loss. Thus, it may be to report the loss of the digital currency hardware wallet, ensuring the security of the digital currency hardware wallet. In addition, the secure element including the digital currency hardware wallet has the features of large storage capacity, great payment security, high application carrying capacity and the like, and has a security level identical to mainstream financial IC chips, thus ensuring the security of user data to the greatest extent.

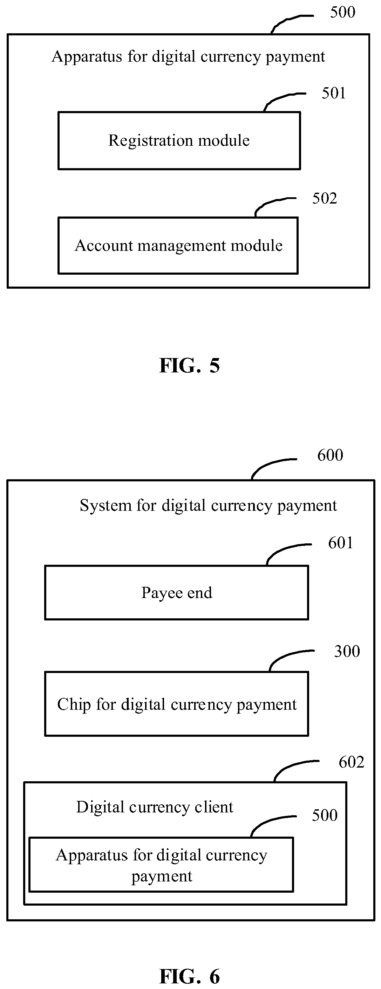

An apparatus for digital currency payment, implemented on a digital currency client, is further provided according to an embodiment of the present disclosure. The apparatus for digital currency payment and a chip for digital currency payment that includes a secure element, a first communication component and a second communication component are installed in a first terminal device. A communication protocol adopted by the first communication component includes a near field communication protocol and/or a range controlled communication protocol. A communication protocol adopted by the second communication component includes a Bluetooth communication protocol A Bluetooth communication connection is established between the apparatus for digital currency payment and the second communication component through the first terminal device. FIG. 5 is a schematic structural diagram of an apparatus for digital currency payment according to an embodiment of the present disclosure. Specifically, as shown in FIG. 5, the apparatus for digital currency payment includes: a registration module 501 and an account management module 502.

The registration module 501 is configured to send a registration request for a digital currency hardware wallet to a trusted service manager, and receive hardware wallet opening data from the trusted service manager.

The account management module 502 is configured to send the hardware wallet opening data to the secure element through the Bluetooth communication connection to open the digital currency hardware wallet in the secure element. The digital currency hardware wallet in the chip for digital currency payment performs a digital currency transaction by using the first communication component.

In an embodiment of the present disclosure, the registration module 501 is further configured to: send an authorization authentication request to the second communication component through the Bluetooth communication connection, and receive an authorization authentication random number corresponding to the authorization authentication request; and generate authorization authentication data based on the authorization authentication random number, and send the authorization authentication data to the second communication component through the Bluetooth communication connection, to cause the second communication component to perform verification on the authorization authentication data. In a case that the authorization authentication data passes the verification, the secure element parses and executes an opening execution instruction included in the hardware wallet opening data, and stores personalized data included in the hardware wallet opening data.

In an embodiment of the present disclosure, the account management module 502 is further configured to: receive a payment request from the digital currency hardware wallet being in a second mode through the second communication component; and generate second payment information corresponding to the payment request, and send the second payment information to a digital currency server, to cause the digital currency server to perform the digital currency transaction based on the second payment information.

In an embodiment of the present disclosure, the account management module 502 is further configured to: establish an account association relationship with the digital currency hardware wallet; share token information with the digital currency hardware wallet in the secure element based on the account association relationship, in a case that the digital currency hardware wallet is in a second mode.

In an embodiment of the present disclosure, the registration module 501 is further configured to: determine, in response to a hardware wallet opening trigger, whether an operating system of the first terminal device is a target system, where a communication protocol interface of the target system corresponding to the first communication component is not open externally; and send, in a case that the operating system of the first terminal device is the target system and no Bluetooth communication connection is established between the first terminal device and the second communication component, a prompt message indicating that no Bluetooth communication connection is established to prompt an operator to trigger link information of the second communication component to establish the Bluetooth communication connection between the first terminal device and the second communication component.

In an embodiment of the present disclosure, the account management module 502 is further configured to: receive a prompt message indicating a network connecting operation from the chip for digital currency payment, to establish a communication connection between the digital currency client and the trusted service manager based on the prompt message; and performing data synchronization between the chip for digital currency payment and the trusted service manager through the communication connection, and send, after data synchronization, new token information sent by the trusted service manager to the chip for digital currency payment, to cause the chip for digital currency payment to update the stored token information and clean up invalid data.

In an embodiment of the present disclosure, the account management module 502 is further configured to: generate, in response to a loss report operation for a digital currency hardware wallet from a second terminal device, a loss report request, and send the loss report request to the digital currency server, to cause the digital currency server to perform loss report processing on the digital currency hardware wallet to prohibit payment by the digital currency hardware wallet. A digital currency client on the second terminal device is logged in an account associated with the digital currency hardware wallet.

In an embodiment of the present disclosure, the apparatus 500 for digital currency payment according to the embodiments may be installed in a form of a plug-in on a conventional digital currency client or a bank client having a digital currency management function. Further, the apparatus 500 for digital currency payment may serve as a digital currency client or a functional module of a bank client having the digital currency management function.

In an embodiment of the present disclosure, as shown in FIG. 6, a system 600 for digital currency payment is provided according to an embodiment of the present disclosure. The system 600 for digital currency payment may include: a payee end 601, the chip 300 for digital currency payment according to the embodiments, and a digital currency client 602 including the apparatus 500 for digital currency payment according to the embodiments.

The chip 300 for digital currency payment and the digital currency client 602 are installed in the first terminal device.

The digital currency hardware wallet in the chip 300 for digital currency payment is opened based on the Bluetooth communication connection between the second communication component included in the chip 300 for digital currency payment and the digital currency client 602.

The payee end 601 is configured to send a payment request to the chip 300 for digital currency payment through the near field communication of the first communication component included in the chip 300 for digital currency payment.

The chip 300 for digital currency payment is configured to perform the digital currency transaction based on the payment request.

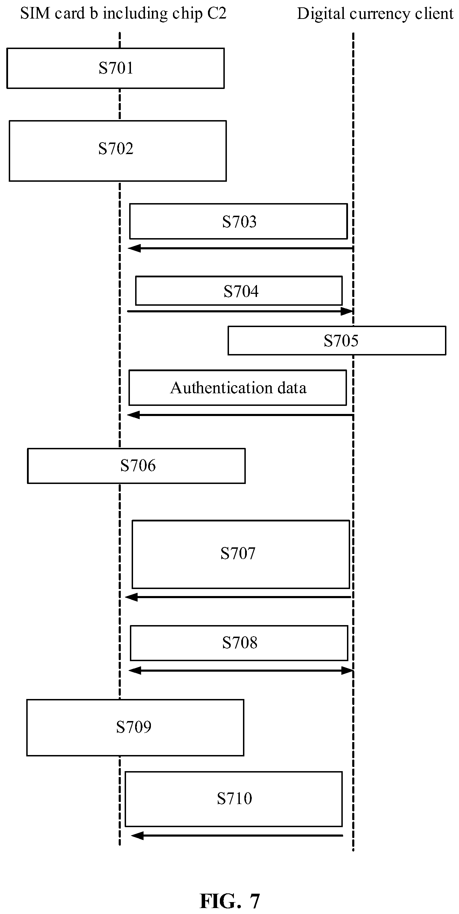

In an embodiment of the present disclosure, to clearly describe the method for digital currency payment through near field communication, the process of opening a digital currency hardware wallet according to method for digital currency payment through the near field communication are described in detail, taking the interaction process between a SIM card b and a digital currency client on a mobile terminal for establishing an association relationship between the digital currency client and the opened digital currency hardware wallet shown in FIG. 7 as an example. The SIM card b includes a chip C2 for digital currency payment that includes the secure element, the first communication component and the second communication component according to the embodiments. The process of opening a digital currency hardware wallet includes the following steps S701 to S710.

In step S701, the chip C2 in the SIM card b provides link information of the second communication component to a first terminal device on which the digital currency client is arranged.

In an embodiment of the present disclosure, before the step S701, the opening the digital currency hardware wallet further includes: determining, after accessing the digital currency client, whether the operating system of the mobile terminal is a target system, where a near field communication interface of the target system (such as an iOS system) is generally not open externally, and determining whether the digital currency client is connected to a Bluetooth chip. In a case that the digital currency client is not connected to the Bluetooth chip, the step S701 is performed.

In step S702, a Bluetooth communication connection between the second communication component and the digital currency client is established in response to a triggering operation of the link information;

In step S703, the chip C2 in the SIM card b receives an authorization authentication request from the digital currency client.

In step S704, the chip C2 in the SIM card b send an authorization authentication random number to the digital currency client.

In step S705, the digital currency client generates authorization authentication data based on the authorization authentication random number.

In step S706, the authorization authentication data is received from the digital currency client, the authorization authentication data is verified, and it is determined that the digital currency client is an authorized digital currency client.

In step S707, the authorized digital currency client sends hardware wallet opening data to the chip C2 in the SIM card b through a Bluetooth communication channel established based on the Bluetooth communication connection, to open the digital currency hardware wallet in the chip C2 in the SIM card b.

In step S708, an association relationship between the digital currency client and the digital currency hardware wallet is established.

In step S709, the digital currency hardware wallet in the chip C2 in the SIM card b shares token information included in the digital currency client based on the association relationship.

In step S710, the digital currency client performs a transfer operation and a query operation for the digital currency hardware wallet in the chip C2 in the SIM card b.

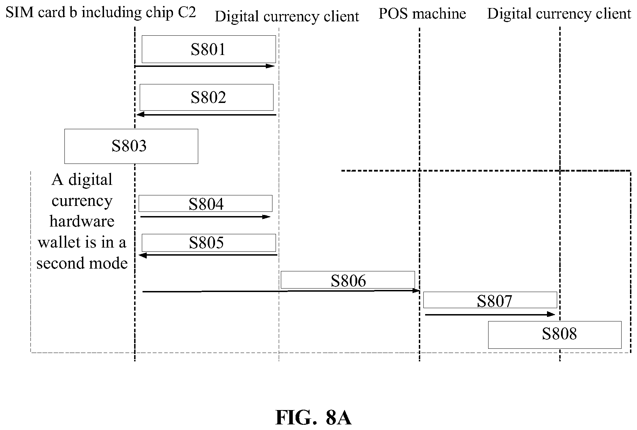

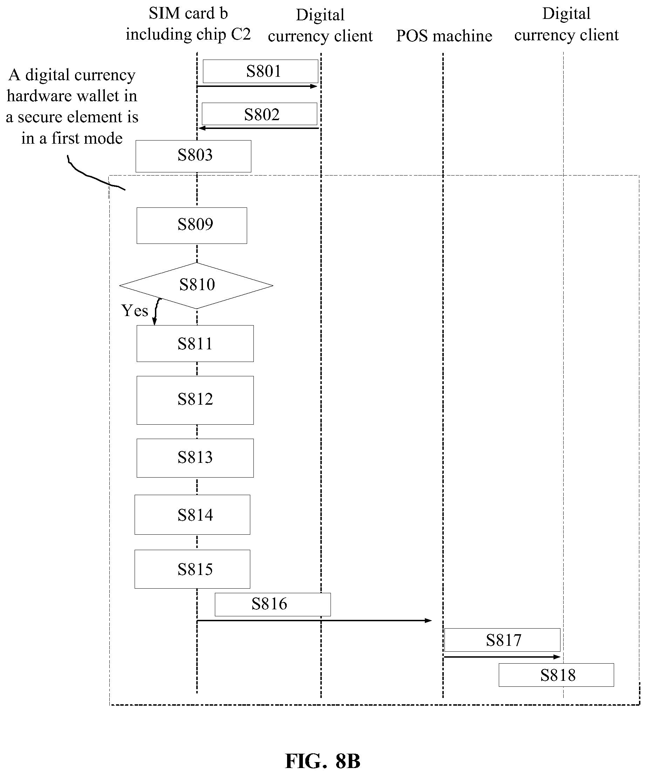

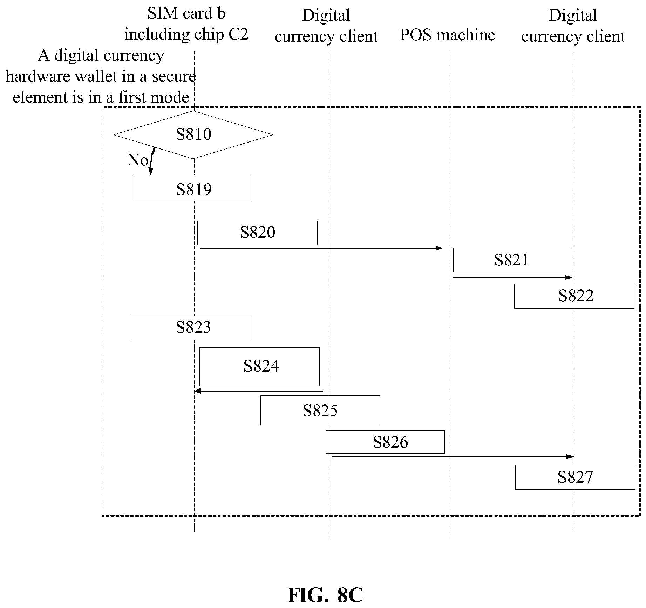

In an embodiment of the present disclosure, to clearly describe the method for digital currency payment through near field communication, a single-offline payment process (in which the digital currency client operates in an offline state) in the method for digital currency payment in a near field communication scenario is described in detail with reference to FIG. 8A, FIG. 8B and FIG. 8C, taking the interaction between the SIM card b including the chip C2 for digital currency payment and a POS machine at a payee end and the interaction between the POS machine at the payee end and a digital currency server, as shown in FIG. 8A, FIG. 8B and FIG. 8C, as an example. The digital currency hardware wallet in the chip C2 for digital currency payment is bound to a digital currency client. The single-offline payment process in the method for digital currency payment in the near field communication scenario includes the following steps S801 to S827.

In step S801, a mobile terminal installed with the SIM card b is placed close to the POS machine, and the chip C2 in the SIM card b establishes near field communication with the POS machine.

In step S802, the SIM card b intercepts, based on a contact payment protocol, interaction information from the POS machine.

In step S803, in a case that the interaction information intercepted by the chip C2 in the SIM card b is receipt information, the receipt information is transmitted to the secure element by using the first communication component. In a case that the digital currency hardware wallet in the secure element is in a second mode, steps S804 to S808 shown in FIG. 8A are performed; and in a case that the digital currency hardware wallet in the secure element is in a first mode, steps S809 to S818 shown in FIG. 8B or steps S810 to S827 shown in FIG. 8C are performed.

In step S804, the chip C2 in the SIM card b sends the receipt information to the digital currency client through the second communication component.

In step S805, the chip C2 in the SIM card b receives second payment information from the digital currency client through the second communication component.

In step S806, the chip C2 in the SIM card b sends the second payment information to the POS machine through the first communication component.

In step S807, the POS machine sends the second payment information to the digital currency server.

In step S808, the digital currency server verifies the second payment information to complete the receipt, and end the current process.

In step S809, the chip C2 in the SIM card b generates a first temporary random number by using the secure element, and obtains target token information matching the receipt information from the digital currency hardware wallet.

In step S810, the chip C2 in the SIM card b determines, by using the secure element, whether a receipt amount indicated by the receipt information exceeds a preset payment threshold. In a case that the receipt amount exceeds the preset payment threshold, proceed to step S811; and in a case that the receipt amount does not exceed the preset payment threshold, proceed to step S819.

In step S811, the chip C2 in the SIM card b provides a password input interface for the first terminal device by using the second communication component, so that the user may input a payment password in the password input interface.

In step S812, the chip C 2 in the SIM card b encrypts the payment password by using the secure element.

In step S813, the secure element of the chip C2 in the SIM card b generates a token key based on the first temporary random number, a payer factor stored in the secure element, a payee factor, and a second temporary random number generated by a payee end, where the payee factor and the second temporary random number are included in the payment request.

In step S814, the secure element of the chip C2 in the SIM card b encrypts the token key by using a payee public key included in the payment request, and encrypts target token information by using the token key.

In step S815, the secure element of the chip C2 in the SIM card b generates first payment information including the encrypted token key and the encrypted target token information, and adds the encrypted payment password to the first payment information.

In step S816, the chip C2 in the SIM card b sends the first payment information to the POS machine by using the first communication component.

In step S817, the POS machine sends the first payment information to the digital currency server.

In step S818, the digital currency server performs verification on the first payment information, and completes the receipt and ends the current process in a case that the first payment information passes verification.

In step S819, the secure element of the chip C2 in the SIM card b generates the first payment information corresponding to the payment request.

The step S819 is performed by: generating, by the secure element of the chip C2 in the SIM card b, a first temporary random number, obtaining account information from the digital currency hardware wallet, and splitting and/or merging one or more pieces of token information included in the digital currency hardware wallet to obtain target token information that matches the receipt information; generating a token key based on the first temporary random number, the payer factor stored in the secure element, the payee factor, and the second temporary random number generated by the payee end, where the payee factor and the second temporary random number are included in the payment request; encrypting the token key by using the payee public key included in the payment request, and encrypting the target token information by using the token key; and generating the first payment information including the encrypted token key and the encrypted target token information.

In step S820, the chip C2 in the SIM card b sends the first payment information to the POS machine through the first communication component.

In step S821, the POS machine sends the first payment information to the digital currency server.

In step S822, the digital currency server verifies the first payment information to complete the receipt process.

In step S823, the chip C2 in the SIM card b stores a transaction record matching the receipt information and the target token information in the secure element.

In step S824, the digital currency client, in a case of being connected to the network, updates the token information included in the digital currency hardware wallet in the secure element of the chip C2 in the SIM card b and the transaction records stored in the secure element.

In step S825, the digital currency client generates a loss report request in response to a loss report operation for a digital currency hardware wallet from a second terminal device.

In step S826, the digital currency client sends the loss report request to the digital currency server.

In step S827, the digital currency server performs loss report processing on the digital currency hardware wallet, to prohibit payment by the digital currency hardware wallet.

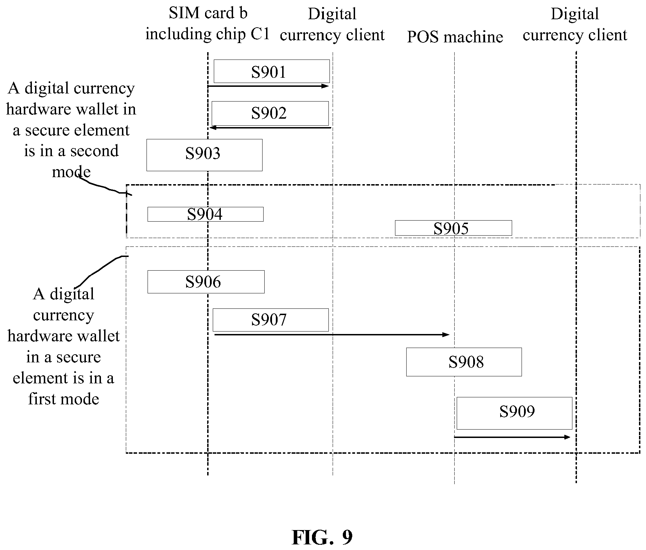

In an embodiment of the present disclosure, to clearly describe the method for digital currency payment in the near field communication scenario, a dual-offline payment process (in which the digital currency client of the POS machine at the payee end is in an offline state and the chip for digital currency payment in the SIM card b is in an offline state) in the method for digital currency payment in a case of the payment amount not exceeding the payment threshold and the payment number not exceeding the preset payment number of the digital currency hardware wallet in the near field communication scenario is described, taking the interaction process between the SIM card b including the chip C2 for digital currency payment and the POS machine at the payee end and the interaction process between the POS machine at the payee end and the digital currency server as shown in FIG. 9 as an example. The dual-offline payment process in the method for digital currency payment includes the following steps S901 to S909.

In step S901, a mobile terminal installed with the SIM card b is placed close to the POS machine, and the chip C2 in the SIM card b establishes near field communication with the POS machine.

In step S902, the SIM card b intercepts, based on a contact payment protocol, interaction information from the POS machine.

In step S903, in a case that the interaction information intercepted by the chip C2 in the SIM card b is receipt information, the receipt information is transmitted to the secure element by using the first communication component. In a case that the digital currency hardware wallet in the secure element is in the second mode, steps S904 and S905 are performed; and in a case that the digital currency hardware wallet in the secure element is in the first mode, steps S906 to S909 are performed.

In step S904, the secure element of the chip C2 in the SIM card b directly refuses payment.

In step S905, the POS machine generates information indicating a payment failure and ends the current process.

In step S906, the secure element of the chip C2 in the SIM card b generates first payment information corresponding to the payment request.

The step S906 is performed by: generating, by the secure element, a first temporary random number, and generating a token key based on the first temporary random number, a payer factor stored in the secure element, a payee factor, and a second temporary random number generated by the payee end, where the payee factor and the second temporary random number are included in the payment request; encrypting the token key by using a payee public key included in the payment request, and encrypting target token information by using the token key; and generating the first payment information including the encrypted token key and the encrypted target token information.

In step S907, the chip C2 in the SIM card b sends the first payment information to the POS machine through the first communication component.

In step S908, the digital currency client of the POS machine decrypts the first payment information and stores the decrypted token information.

That is, in a case that the digital currency client of the POS machine operates in an offline state (that is, no communication connection is established between the digital currency client of the POS machine and the digital currency server), the digital currency client may store the decrypted token information.

In step S909, the digital currency client of the POS machine, after being connected to a network, synchronize data of the first payment information to the digital currency server.

In an embodiment of the present disclosure, in the above digital currency payment process, after performing payment successfully, the digital currency server may directly push a notification in a message or a UI form to the mobile terminal or the digital currency client.

On the basis of the above embodiments, in the method for digital currency payment, in a case that both the chip for digital currency payment and the digital currency client are online (that is, a Bluetooth communication connection is established between the chip for digital currency payment and the digital currency client and the digital currency client is in a networked state) and the digital currency hardware wallet in the chip for digital currency payment is in the second mode, the chip for digital currency payment may send a payment request from the payee end to the digital currency client through a Bluetooth communication channel established based on the Bluetooth communication connection, the digital currency client sends the payment request to the digital currency server, and the digital currency server performs a digital currency transaction based on the payment request and token information of an account bound to the digital currency hardware wallet.

A chip for digital currency payment including the above-described secure element and the first communication component is further provided according to an embodiment of the present disclosure. A digital currency hardware wallet may be opened in the chip in another manner and the chip may store account information for the digital currency hardware wallet. Further, the chip may store token information for the digital currency hardware wallet in another manner such as bank transfer and transfer through the first communication component.

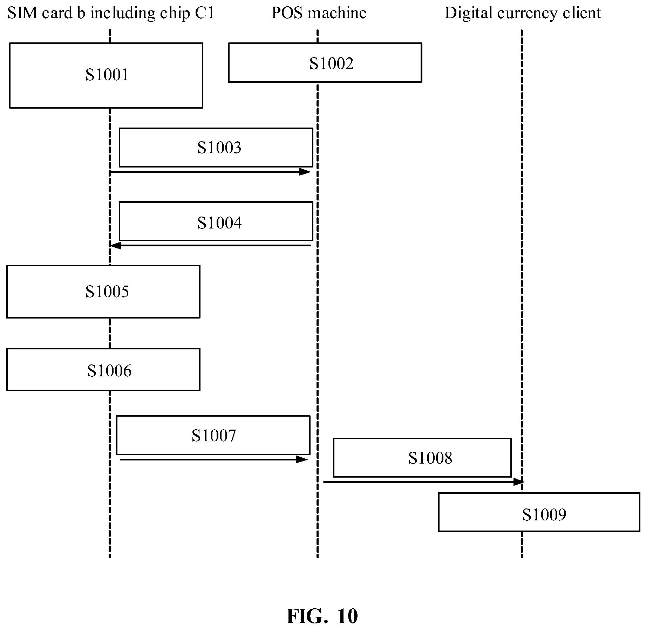

To clearly describe the method for digital currency payment through near field communication, the method for digital currency payment in a near field communication scenario is described in detail, taking the interaction between a POS machine at a payee end and a SIM card a including a chip C1 for digital currency payment (where the chip C1 only includes a secure element and a first communication component) and the interaction between the POS machine at the payee end and a digital currency server shown in FIG. 10 as an example. The method for digital currency payment through near field communication may include the following steps S1001 to S1009.

In step S1001, a digital currency hardware wallet is registered and opened in the chip C1 included in the SIM card a, and account information and one or more pieces of token information indicating a digital currency amount are stored in the digital currency hardware wallet.

In step S1002, an amount that the user needs to pay is inputted, by a merchant, on the POS machine, and the POS machine generates payment information based on the amount.

In step S1003, a mobile terminal installed with the SIM card a is placed close to the POS machine, and the chip C1 in the SIM card a establishes near field communication with the POS machine.

In step S1004, the chip C1 in the SIM card a intercepts interaction information sent externally.

In step S1005, in a case that the intercepted interaction information is the payment information, the chip C1 transmits the payment information to the secure element by using the first communication component.

In step S1006, the chip C1 generates first payment information corresponding to a payment request through the secure element.

The implementation of the step is similar to the implementation of step S906 described above and is not repeated herein.

In step S1007, the chip C1 sends the first payment information to the POS machine through the first communication component.

In step S1008, the POS machine sends the first payment information to the digital currency server.

In step S1009, the digital currency server performs verification on the first payment information, and performs payment in a case that the first payment information passes verification.

It should be noted that the digital currency server involved in the above-described embodiments may include a server related to digital currency transactions, a trusted service manager for managing digital currency accounts, or the like.

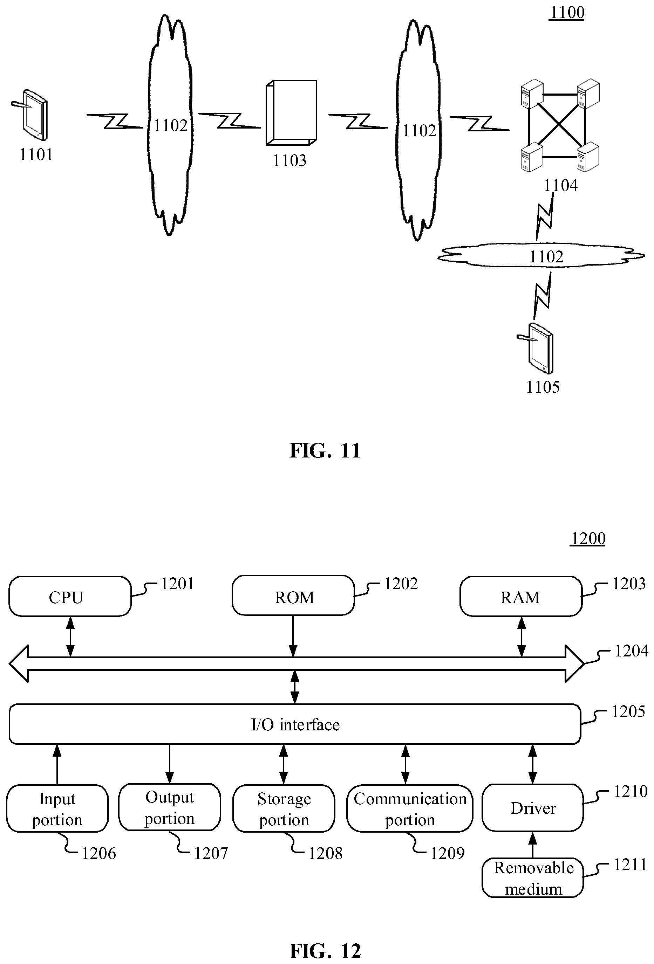

FIG. 11 a schematic diagram of an exemplary system structure 1100 to which the method for digital currency payment or the chip for digital currency payment according to the embodiments of the present disclosure may be applied.

As shown in FIG. 11, the system architecture 1100 may include a first terminal device 1101, a network 1102, a payee end 1103, a digital currency server 1104, and a second terminal device 1105. The first terminal device 1101 is installed with a SIM card, and the SIM card includes a chip for digital currency payment. The chip for digital currency payment includes a secure element, a first communication component adopting a communication protocol that includes a near field communication protocol and/or a range controlled communication protocol, and a second communication component adopting a communication protocol that includes a Bluetooth communication protocol. The network 1102 is used as a medium for providing communication links between the first terminal device 1101 and the digital currency server 1104, between the payee end 1103 and the digital currency server 1104, and between the second terminal device 1105 and the digital currency server 1104. The network 1102 may include various types of connection links, such as wired communication link, wireless communication links, and fiber optic cables.

A digital currency client installed in the first terminal device 1101 may be used by the user to interact with the digital currency server 1104 through the network 1102 to receive or send a message. For example, the digital currency server 1104 receives a user digital identity registration request, a digital currency account query request, and the like from the first terminal device 1101, and the first terminal device 1101 receives a registration success message, an account query result, and the like from the digital currency server 1104 to the digital currency client of the first terminal device 1101. The digital currency client installed in the first terminal device 1101 may establish a Bluetooth communication connection with the SIM card installed in the first terminal device 1101, open a digital currency hardware wallet for storing account information and token information in the chip for digital currency payment included in the SIM card, and update the token information and transaction records stored in the chip for digital currency payment included in the SIM card installed in the first terminal device 1101.

The chip for digital currency payment included in the SIM card installed in the first terminal device 1101 may be used to interact with the payee end through near field communication. For example, the chip for digital currency payment included in the SIM card installed in the first terminal device 1101 may be used to receive a payment request from the payee end 1103 through near field communication, and sends payment information corresponding to the payment request to the payee end 1103 through near field communication. The chip for digital currency payment included in the SIM card installed in the first terminal device 1101 may receive, through near field communication, a prompt message indicating a payment success or a payment failure from the payee end 1103.

The payee end 1103 sends the received payment information to the digital currency server 1104, and the digital currency server 1104 performs verification on the payment information. In a case that the payment information passes the verification, the digital currency server 1104 sends a message indicating that the payment is successful or the payment is received to the payee end 1103.

The second terminal device 1105 is installed with a digital currency client. The digital currency client installed in the second terminal device 1105 is used to send an account query request for a digital currency hardware wallet or a loss report request for a digital currency hardware wallet to the digital currency server 1104. The digital currency server 1104 reports the loss of the digital currency hardware wallet.

The first terminal device 1102 and the second terminal device 1105 may have various communication client applications installed thereon, such as a digital currency client application, a financial related client, a web browser application, a search application, an instant messaging tool, an email client, and social platform software (as examples only).

The first terminal device 1101 and the second terminal device 1105 may be various electronic devices that have display screens and support web browsing, including but not limited to smart phones and tablet computers that can be installed with SIM cards.

The digital currency server 1104 may be a server that provides various services, or may be a service system implemented based on a blockchain or a distributed ledger, for example, a background management server that supports identity authentication or digital currency transactions sent by using the first terminal device 1101 or the payee end 1103 (as an example only). The digital currency server 1103 may perform analysis and other processing on received data such as identity authentication data or digital currency transaction data, and feeds back a processing result (such as authentication success or transaction success) to the first terminal device or the payee end.

It should be noted that the method for digital currency payment according to the embodiments of the present disclosure is generally performed by the first terminal device 1101 installed with a digital currency client and a SIM card (where the SIM card includes a chip for digital currency payment), the payee end 1103, and the digital currency server 1104 in cooperation with each other.

It should be understood that the numbers of the first terminal device, the payee end, the digital currency server, and the second terminal device shown in FIG. 11 are illustrative only. According to implementation requirements, the first terminal device, the payee end, the digital currency server, and the second terminal device may be configured in any quantity.

Reference is made to FIG. 12, which is a schematic structural diagram of a computer system 1200 suitable for implementing the first terminal device, the payee end or the digital currency server according to the embodiments of the present disclosure. The computer system 1200 shown in FIG. 12 is only exemplary, and is not intended to limiting the function and application scope of the embodiments of the present disclosure.

As shown in FIG. 12, the computer system 1200 includes a central processing unit (CPU) 1201, which may perform various appropriate actions and processes based on a program stored in a read-only memory (ROM) 1202 or a program loaded from a storage portion 1208 to a random-access memory (RAM) 1203. The RAM 1203 also has various programs and data for operation of the system 1200 stored thereon. The CPU 1201, the ROM 1202 and the RAM 1203 are connected to each other via a bus 1204. An input/output (I/O) interface 1205 is also connected to the bus 1204.

The following components are connected to the I/O interface 1205: an input portion 1206 including a keyboard, a mouse and the like, an output portion 1207 including a cathode ray tube (CRT), a liquid crystal display (LCD), a speaker and the like, a storage portion 1208 including a hard disk and the like, and a communication portion 1209 including a network interface card, such as a LAN card, a modem and the like, and a near field communication including NFC, RCC and the like. The communication portion 1209 performs communication processing via a network, such as the Internet, or near field communication. A driver 1210 may be connected to the I/O interface 1205 as needed. A removable medium 1211, such as a magnetic disk, an optical disk, a magnetic optical disk, a semiconductor memory, etc., is installed on the driver 1210 as required, so that a computer program read therefrom is installed on the storage portion 1208 as required.

Particularly, according to the embodiments of the present disclosure, the foregoing processes in conjunction with flowcharts may be implemented as a computer software program. For example, a computer program product is provided according to an embodiment of the present disclosure. The computer program product includes a computer program carried on a computer-readable medium, and the computer program includes program codes for performing the methods shown in the flowcharts. In such an embodiment, the computer program may be downloaded and installed from a network through the communication portion 1209, and/or may be installed from the removable medium 1211. When the computer program is executed by the central processing unit (CPU) 1201, the functions defined in the system of the present disclosure are executed.

It should be noted that the computer-readable medium according to the present disclosure may be a computer-readable signal medium or a computer-readable storage medium or any combination thereof. The computer-readable storage medium may include, but is not limited to, a system, an apparatus, or a device in an electronic, magnetic, optical, electromagnetic, infrared, or semi-conductive form, or any combination thereof. More specific examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device or any suitable combination thereof. In the present disclosure, the computer-readable storage medium may be any tangible medium including or storing a program, and the program may be used by or used in combination with an instruction execution system, apparatus, or device. In the present disclosure, the computer-readable signal medium may include a data signal in a baseband or transmitted as a part of a carrier wave and the computer-readable signal medium stores computer-readable program codes. The propagated data signal may be in various forms, including but not limited to an electromagnetic signal, an optical signal or any suitable combination thereof. The computer-readable signal medium may further be any computer-readable medium other than the computer-readable storage medium. The computer-readable medium is configured to send, propagate, or transmit a program to be used by a system, an apparatus, or a device capable of executing instructions or a program used in conjunction with the system, apparatus or device. The program codes included in the computer-readable medium may be transmitted using any suitable medium, including but not limited to a wireless medium, a wire, an optical fiber cable, an RF or the like, or any suitable combination of the above.

Flowcharts and block diagrams in the drawings illustrate architecture, functions and operations that can be implemented by the system, method and computer program product according to the embodiments of the present disclosure. Each of the blocks in the flowcharts or the block diagrams may represent a module, a program segment, or a part of codes, and the module, the program segment or the part of codes includes one or more executable instructions for implementing a specified logical function. It should be noted that, in some alternative implementations, the functions marked in blocks may be performed in an order different from the order shown in the drawings. For example, two blocks shown in succession may actually be executed in parallel, or sometimes may be executed in a reverse order, which depends on functions involved. It should be noted that each of the blocks in the block diagrams and/or the flowcharts and a combination of blocks in the block diagrams and/or the flowcharts may be implemented by using a dedicated hardware-based system for performing specified functions or operations, or may be implemented by using a combination of dedicated hardware and computer instructions.

The units mentioned in the description of the embodiments of the present disclosure may be implemented by means of software, or otherwise by means of hardware. The described unit may be provided in a processor. For example, it may be described as: a processor including a secure element, a first communication component and a second communication component. The names of the element and components do not, in some cases, constitute a limitation of the element and components, for example, the secure element may be described as a "component that generates payment information".

In another aspect, a computer-readable medium is further provided according to the present disclosure. The computer-readable medium may be included in the device described in the foregoing embodiments, or may be exist independently without being assembled in the device. The computer-readable medium stores one or more programs. The one or more programs, when executed by a device, cause the device to: receive, by using a second communication component, hardware wallet opening data from a digital currency client, and open a digital currency hardware wallet in a secure element; and receive, by using a first communication component, a payment request, and perform a digital currency transaction.

According to the technical solutions in the embodiments of the present disclosure, a Bluetooth communication connection is established between the second communication component that may adopt a Bluetooth communication protocol included in the chip for digital currency payment (hereinafter referred to as the chip) and the authorized digital currency client, so that the authorized digital currency client may open a digital currency hardware wallet in the secure element included in the chip. The chip may receive a payment request through the first communication component that may adopt a near field communication protocol and/or a range controlled communication protocol and performs a digital currency transaction. That is, a NFC digital currency transaction is performed through the first communication component of the chip. As the chip includes the first communication component adopting the near field communication protocol and/or the range controlled communication protocol, the chip, when being implemented on a mobile terminal, may address the issue of NFC payment for mobile terminals without the NFC function or mobile terminals of which NFC interface is not open externally. Therefore, with the solutions according to the embodiments of the present disclosure, the issue of application limitations in NFC payment is solved, and thereby effectively expanding the application scenarios of NFC payment.

The above embodiments in the specification are described in a progressive manner. The embodiments each focus on the differences from other embodiments, and reference may be made to each other with respect to the same or similar parts.

It should be noted that the relationship terms "first", "second" and the like are only used herein to distinguish one entity or operation from another, rather than to necessitate or imply that an actual relationship or order exists between the entities or operations. Furthermore, terms such as "include", "comprise" or any variants thereof are intended to be non-exclusive. Therefore, a process, a circuit, an article or a device including a series of elements includes not only the elements but also other elements that are not enumerated, or further includes elements inherent to the process, the circuit, the article or the device. Unless expressively limited, the statement "including a..." does not exclude the case that other similar elements may exist in the process, the circuit, the article, or the device other than enumerated...

The technical solutions according to the present disclosure are described above in detail. A principle and embodiments of the present disclosure are described using specific examples. The embodiments are illustrated to facilitate understanding a circuit and a core idea of the present disclosure. It should be noted that, those skilled in the art may make several improvements and modifications to the present disclosure without departing from the principles of the present disclosure, and these improvements and modifications shall fall within the protection scope of the present disclosure.

## Claims

1. A method for digital currency payment, implemented on a chip, wherein the chip comprises a secure element, a first communication component and a second communication component, wherein the secure element opens a digital currency hardware wallet, a communication protocol adopted by the first communication component comprises a near field communication protocol and/or a range controlled communication protocol, and a communication protocol adopted by the second communication component comprises a Bluetooth communication protocol; and
wherein the method comprises:
receiving, by the second communication component, hardware wallet opening data from a digital currency client, and opening a digital currency hardware wallet in the secure element; and
receiving, by the first communication component, a payment request, and performing, by the digital currency hardware wallet, a digital currency transaction.

2. The method according to claim 1, further comprising:
receiving, by the second communication component, an authorization authentication request from the digital currency client, generating an authorization authentication random number in response to the authorization authentication request, and sending the authorization authentication random number to the digital currency client, to cause the digital currency client to generate authorization authentication data based on the authorization authentication random number; and
performing verification, by the second communication component, on the authorization authentication data from the digital currency client, determining, in a case that the authorization authentication data passes the verification, that the digital currency client is an authorized digital currency client, and receiving the hardware wallet opening data from the digital currency client.

3. The method according to claim 1 or 2, wherein the opening a digital currency hardware wallet in the secure element comprises:
decrypting, by the second communication component, the hardware wallet opening data, and transmitting the decrypted hardware wallet opening data to the secure element, wherein the hardware wallet opening data comprises an opening execution instruction and personalized data; and
parsing and executing, by the secure element, the opening execution instruction, and storing, by the secure element, the personalized data.

4. The method according to claim 1 or 2, further comprising:
sending link information of the second communication component to a first terminal device on which the digital currency client is arranged; and
establishing a Bluetooth communication connection between the second communication component and the digital currency client, in response to a triggering operation on the link information.

5. The method according to claim 1, wherein the receiving, by the first communication component, a payment request comprises:
intercepting external interaction information; and
invoking, in a case that the intercepted external interaction information is a payment request, the first communication component to transmit the payment request to the secure element.

6. The method according to claim 1, wherein
the digital currency hardware wallet has a first mode or a second mode, wherein in the first mode, a transaction is performed based on token information stored in the digital currency hardware wallet, and in the second mode, a transaction is performed based on a digital currency account associated with the digital currency hardware wallet; and
the receiving, by the first communication component, a payment request and performing, by the digital currency hardware wallet, a digital currency transaction comprises:
performing, in a case that the digital currency hardware wallet is in the first mode, the digital currency transaction based on the token information that indicates a digital currency amount stored in the digital currency hardware wallet; and
sending, in a case that the digital currency hardware wallet is in the second mode, the payment request to a digital currency server through the digital currency client and a Bluetooth communication channel between the second communication component and the digital currency client, to cause the digital currency server to perform the digital currency transaction in response to the payment request based on the digital currency account associated with the digital currency hardware wallet.

7. The method according to claim 6, further comprising:
binding, in a case that the digital currency hardware wallet being in the first mode is of a first hardware wallet type, the digital currency client to the digital currency hardware wallet in response to a binding trigger, to convert the digital currency hardware wallet to be of a second hardware wallet type, wherein for the first hardware wallet type, the digital currency hardware wallet is not bound to the digital currency client, and for the second hardware wallet type, the digital currency hardware wallet is bound to the digital currency client; and
switching the digital currency hardware wallet of the second hardware wallet type between the first mode and the second mode in response to receiving a mode conversion switching.

8. The method according to claim 6, wherein after receiving the payment request by the first communication component, the method further comprises:
in a case that the digital currency hardware wallet is in the first mode,
determining whether a consecutive transaction number of the digital currency hardware wallet exceeds a preset number threshold;
performing data synchronization with the digital currency server through the Bluetooth communication connection and the digital currency client, receiving and storing new token information from the digital currency server after data synchronization through the Bluetooth communication connection and the digital currency client, and cleaning up invalid data, in a case that the consecutive transaction number of the digital currency hardware wallet exceeds the preset number threshold; and
performing the digital currency transaction based on the token information that indicates the digital currency amount stored in the digital currency hardware wallet, in a case that the consecutive transaction number of the digital currency hardware wallet does not exceed the preset number threshold.

9. The method according to claim 6 or 8, wherein the performing the digital currency transaction based on the token information that indicates a digital currency amount stored in the digital currency hardware wallet comprises:
generating, by the secure element, a first temporary random number, and obtaining target token information matching the payment request from the digital currency hardware wallet;
generating a token key based on the first temporary random number, a payer factor stored in the secure element, a payee factor and a second temporary random number generated by a payee end, wherein the payee factor and the second temporary random number are comprised in the payment request;
encrypting the token key by using a payee public key comprised in the payment request, and encrypting the target token information by using the token key;
generating first payment information comprising the encrypted token key and the encrypted target token information; and
sending, by the first communication component, the first payment information to the payee end corresponding to the payment request, to perform the digital currency transaction based on the first payment information.

10. The method according to claim 9, wherein before sending the first payment information to the payee end corresponding to the payment request, the method further comprises:
determining whether a payment amount indicated by the payment request exceeds a preset payment threshold;
adding an encrypted payment password to the first payment information, and sending the first payment information added with the encrypted payment password to the payee end to perform the digital currency transaction based on the first payment information added with the encrypted payment password, in a case that the payment amount indicated by the payment request exceeds the preset payment threshold; and
sending the first payment information to the payee end corresponding to the payment request, in a case that the payment amount indicated by the payment request does not exceed the preset payment threshold.

11. A method for digital currency payment, implemented on a digital currency client, wherein the digital currency client and a chip for digital currency payment that comprises a secure element, a first communication component and a second communication component are installed in a first terminal device, a communication protocol adopted by the first communication component comprises a near field communication protocol and/or a range controlled communication protocol, and a communication protocol adopted by the second communication component comprises a Bluetooth communication protocol; and
wherein the method comprises:
establishing a Bluetooth communication connection between the second communication component and the first terminal device;
sending a registration request for a digital currency hardware wallet to a trusted service manager;
receiving hardware wallet opening data from the trusted service manager; and
sending the hardware wallet opening data to the secure element through the Bluetooth communication connection to open the digital currency hardware wallet in the secure element, wherein the digital currency hardware wallet in the chip for digital currency payment performs a digital currency transaction by using the first communication component.

12. The method according to claim 11, further comprising:
sending an authorization authentication request to the second communication component through the Bluetooth communication connection, and receiving an authorization authentication random number for the authorization authentication request; and
generating authorization authentication data based on the authorization authentication random number, and sending the authorization authentication data to the second communication component through the Bluetooth communication connection, to cause the second communication component to perform verification on the authorization authentication data, wherein in a case that the authorization authentication data passes the verification, the secure element parses and executes an opening execution instruction comprised in the hardware wallet opening data and stores personalized data comprised in the hardware wallet opening data.

13. The method according to claim 11, further comprising:
receiving a payment request from the digital currency hardware wallet being in a second mode through the second communication component; and
generating second payment information corresponding to the payment request, and sending the second payment information to a digital currency server, to cause the digital currency server to perform the digital currency transaction based on the second payment information.

14. The method according to claim 11, further comprising:
establishing an account association relationship with the digital currency hardware wallet; and
sharing token information with the digital currency hardware wallet in the secure element based on the account association relationship, in a case that the digital currency hardware wallet is in a second mode.

15. The method according to claim 11, wherein the establishing a Bluetooth communication connection between the second communication component and the first terminal device comprises:
determining, in response to a hardware wallet opening trigger, whether an operating system of the first terminal device is a target system, wherein a communication protocol interface of the target system corresponding to the first communication component is not open externally; and
sending, in a case that the operating system of the first terminal device is the target system and no Bluetooth communication connection is established between the first terminal device and the second communication component, a prompt message indicating that no Bluetooth communication connection is established to prompt an operator to trigger link information of the second communication component to establish the Bluetooth communication connection between the first terminal device and the second communication component.

16. The method according to claim 11, further comprising:
receiving a prompt message indicating a network connecting operation from the chip for digital currency payment, to establish a communication connection between the digital currency client and the trusted service manager based on the prompt message; and
performing data synchronization between the chip for digital currency payment and the trusted service manager through the communication connection, and sending, after data synchronization, new token information sent by the trusted service manager to the chip for digital currency payment, to cause the chip for digital currency payment to update stored token information and clean up invalid data.

17. The method according to any one of claims 11 to 16, further comprising:
generating, in response to a loss report operation for a digital currency hardware wallet from a second terminal device, a loss report request, and sending the loss report request to the trusted service manager, to cause the trusted service manager to perform loss report processing on the digital currency hardware wallet to prohibit payment of the digital currency hardware wallet, wherein a digital currency client on the second terminal device is logged in an account associated with the digital currency hardware wallet.

18. A chip for digital currency payment, comprising a secure element, a first communication component, and a second communication component, wherein
a communication protocol adopted by the first communication component comprises a near field communication protocol and/or a range controlled communication protocol, and the first communication component is configured to receive a payment request;
a communication protocol adopted by the second communication component comprises a Bluetooth communication protocol, and the second communication component is configured to receive hardware wallet opening data from a digital currency client; and
the secure element is configured to open a digital currency hardware wallet based on the hardware wallet opening data, and control the digital currency hardware wallet to perform a digital currency transaction by using the first communication component in response to the payment request.

19. An apparatus for digital currency payment, wherein the apparatus for digital currency payment and a chip for digital currency payment that comprises a secure element, a first communication component and a second communication component are installed in a first terminal device, a communication protocol adopted by the first communication component comprises a near field communication protocol and/or a range controlled communication protocol, a communication protocol adopted by the second communication component comprises a Bluetooth communication protocol; a Bluetooth communication connection is established between the apparatus for digital currency payment and the second communication component through the first terminal device; and the apparatus for digital currency payment comprises a registration module and an account management module, wherein
the registration module is configured to send a registration request for a digital currency hardware wallet to a trusted service manager, and receive hardware wallet opening data from the trusted service manager; and
the account management module is configured to send the hardware wallet opening data to the secure element through the Bluetooth communication connection to open the digital currency hardware wallet in the secure element, wherein the digital currency hardware wallet in the chip for digital currency payment performs a digital currency transaction by using the first communication component.

20. A system for digital currency payment, comprising a payee end, the chip for digital currency payment according to claim 18, and the apparatus for digital currency payment according to claim 19, wherein
the chip for digital currency payment and the digital currency client are installed in the first terminal device;
the digital currency hardware wallet in the chip for digital currency payment is opened based on the Bluetooth communication connection between the second communication component comprised in the chip for digital currency payment and the digital currency client;
the payee end is configured to send a payment request to the chip for digital currency payment through the near field communication of the first communication component comprised in the chip for digital currency payment; and
the chip for digital currency payment is configured to control the digital currency hardware wallet to perform the digital currency transaction based on the payment request.

21. An electronic device, comprising the chip for digital currency payment according to claim 18 and a digital currency client comprising the apparatus for digital currency payment according to claim 19.

22. A computer-readable medium, storing a computer program, wherein the computer program, when executed by a processor, causes the processor to perform the methods according to any one of claims 1 to 17.
